(19) Europäisches Patentamt
European Patent Office
Office européen des brevets

(11) **EP 1 600 007 B1**

(12) **EUROPÄISCHE PATENTSCHRIFT**

(45) Veröffentlichungstag und Bekanntmachung des Hinweises auf die Patenterteilung:
**19.12.2007 Patentblatt 2007/51**

(21) Anmeldenummer: **04714289.8**

(22) Anmeldetag: **25.02.2004**

(51) Int Cl.:
**H04N 13/00** (2006.01)

(86) Internationale Anmeldenummer:
**PCT/EP2004/001833**

(87) Internationale Veröffentlichungsnummer:
**WO 2004/077839 (10.09.2004 Gazette 2004/37)**

(54) **ANORDNUNG ZUR RÄUMLICHEN DARSTELLUNG**

STEREOSCOPIC DISPLAY ARRANGEMENT

DISPOSITIF DE REPRESENTATION SPATIALE

(84) Benannte Vertragsstaaten:
**AT BE BG CH CY CZ DE DK EE ES FI FR GB GR HU IE IT LI LU MC NL PT RO SE SI SK TR**

(30) Priorität: **26.02.2003 DE 10309194**

(43) Veröffentlichungstag der Anmeldung:
**30.11.2005 Patentblatt 2005/48**

(73) Patentinhaber: **X3D Technologies GmbH**
**07745 Jena (DE)**

(72) Erfinder:
• **TZSCHOPPE, Wolfgang**
**07751 Rothenstein (DE)**
• **BRÜGGERT, Thomas**
**07745 Jena (DE)**
• **RELKE, Ingo**
**07747 Jena (DE)**
• **OTTE, Stephan**
**07747 Jena (DE)**
• **KLIPPSTEIN, Markus**
**07751 Jena (DE)**

(74) Vertreter: **Hofmann, Harald et al**
**24IP Law Group**
**Sonnenberg Fortmann**
**Postfach 33 08 65**
**80068 München (DE)**

(56) Entgegenhaltungen:
EP-A- 0 752 610        WO-A-01/56265
DE-U- 20 121 318       US-A- 6 137 456

**Beschreibung**

**Gebiet der Erfindung**

Die Erfindung bezieht sich auf Anordnungen zur räumlichen Darstellung, insbesondere auf derartige, die einem oder mehreren Betrachtern ohne zusätzliche Hilfsmittel wie Brillen ein dreidimensional wahrnehmbares Bild darbieten.

**Stand der Technik**

Im Stand der Technik sind verschiedene derartige Verfahren und Anordnungen bekannt.

Eine Vielzahl bekannter Verfahren und Anordnungen zur räumlichen Darstellung basiert auf der räumlichen oder der räumlich-zeitlichen Aufteilung verschiedener Ansichten einer Szene auf einem Gerät zur Bildwiedergabe. Bei den Ansichten handelt es sich dabei in der Regel entweder um räumlich in der Tiefe gestaffelte Schichtbilder oder um aus verschiedenen Perspektiven aufgenommene Bilder. Als Geräte zur Bildwiedergabe finden z. B. LC-Displays eine immer weiter verbreitete Anwendung. So werden beispielsweise in US 5 936 774 Verfahren und Anordnung zur autostereoskopischen Darstellung von zwei bis vier Perspektivansichten auf einem LC-Display beschrieben. Auch in EP 0 791 847, EP 0 783 825, JP 8 194 190 werden auf LC-Displays basierende Anordnungen zur autostereoskopischen Darstellung beschrieben. Eine vorteilhafte Anordnung dieser Art ist in der DE 100 03 326 C2 beschrieben. Hierbei kommt mindestens ein Wellenlängenfilterarray zum Einsatz, welches Ausbreitungsrichtungen für Licht verschiedener Bildelemente vorgibt. Besagte Bildelemente stellen Bildteilinformationen mehrerer Ansichten einer Szene bzw. eines Gegenstandes dar. Auf Grund der vorgegebenen Lichtausbreitungsrichtungen sehen die Augen eines Betrachters jeweils überwiegend eine erste und eine zweite Auswahl an Ansichten, wodurch beim Betrachter ein räumlicher Eindruck erzeugt wird.

DE20121318 U1 offenbart eine Anordnung zur räumlichen Darstellung einer Szene oder eines Gegenstandes gemäß dem Oberbegriff des Anspruchs 1.

Während diese Verfahren und Anordnungen etliche Vorteile, so etwa die potentielle Verminderung von Moiré-Effekten, die Tauglichkeit für mehrere Betrachter sowie die Vermeidbarkeit von Hilfsmitteln zur räumlichen Wahrnehmbarkeit bietet, sind sie nachteilig von einer verminderten Helligkeit gekennzeichnet.

**Beschreibung der Erfindung**

Es ist Aufgabe der vorliegenden Erfindung, Anordnungen der vorgenannten Art derart weiterzubilden, daß eine erhöhte Helligkeit bei der 3D-Darstellung erzielt wird. Weiterhin soll in speziellen Ausgestaltungen der erfindungsgemäßen Anordnungen eine verbesserte Lesbarkeit von gewöhnlichem Text erzielt werden.

Diese Aufgabe wird bei einer Anordnung der vorgenannten Art zur räumlichen Darstellung einer Szene/eines Gegenstandes, umfassend einen Bildgeber mit einer Vielzahl einzelner Bildelemente $\alpha_{ij}$ in einem Raster aus Zeilen j und Spalten i, wobei auf den Bildelementen $\alpha_{ij}$ Teilinformationen aus mindestens drei Ansichten $A_k$ (k=1...n, n≥3) der Szene/des Gegenstandes wiedergegeben werden, ein oder mehrere Arrays aus einer Vielzahl einzelner, in Zeilen q und Spalten p angeordneter, als Filterelemente $\beta_{pq}$ ausgeführte Wellenlängen- und/oder Graustufenfilter von denen ein Teil in vorgegebenen Wellenlängenbereichen lichtdurchlässig ist, und der übrige Teil lichtundurchlässig ist und die dem Bildgeber mit den Bildelementen $\alpha_{ij}$ in Blickrichtung vor- und/oder nachgeordnet sind, so daß für das von den Bildelementen $\alpha_{ij}$ abgestrahlte Licht Ausbreitungsrichtungen vorgegeben werden, wobei jeweils ein Bildelement $\alpha_{ij}$ mit mehreren zugeordneten Filterelementen oder ein Filterelement mit mehreren zugeordneten Bildelementen $\alpha_{ij}$ derart korrespondiert, daß jeweils die Verbindungsgerade zwischen der Flächenmitte eines sichtbaren Abschnittes des Bildelementes $\alpha_{ij}$ und der Flächenmitte eines sichtbaren Abschnittes des Filterelements einer Ausbreitungsrichtung entspricht, wobei sich die Ausbreitungsrichtungen innerhalb eines Betrachtungsraumes, in dem sich der/die Betrachter aufhalten, in einer Vielzahl von Schnittpunkten, die jeweils einer Betrachtungsposition entsprechen, kreuzen, wodurch von jeder Betrachtungsposition aus ein Betrachter mit ei-nem Auge überwiegend Teilinformationen einer ersten Auswahl und mit dem anderen Auge überwiegend Teilinformationen einer zweiten Auswahl aus den Ansichten $A_k$ (k=1...n) optisch wahrnimmt, dadurch gelöst, daß auf mindestens einem der Arrays das Verhältnis der Flächenanteile der für das gesamte sichtbare Spektrum lichtdurchlässigen Filterelemente $\beta_{pq}$ zur Gesamtfläche aller Filterelemente $\beta_{pq}$, multipliziert mit der durchschnittlichen Anzahl n' von den verschiedenen, pro Zeile j des Rasters aus Bildelementen $\alpha_{ij}$ dargestellten Ansichten, größer als 1 und höchstens 2 ist.

Indem mehr Licht durch die Filterelemente zum Betrachter gelangt, kann die Helligkeit erhöht werden.

Der 3D-Eindruck bleibt bei solchen Anordnungen - gegenüber herkömmlichen Anordnungen - ohne spürbare Beeinträchtigungen, bei denen die Transparentfilter so dimensioniert sind, daß pro sichtbarem Rasterabschnitt in bezug auf die Bildelementfläche stets mehr als ein Bildelement $\alpha_{ij}$ sichtbar ist. Dies ist insbesondere bei solchen, bevorzugten Ausgestaltungen der Erfindung der Fall, wo der Quotient aus der Summe der Flächenanteile von Filterelementen $\beta_{pq}$,

die für Licht des im wesentlichen gesamten sichtbaren Spektrums weitestgehend durchlässig sind, und der Summe der Flächenanteile aller Filterelemente $\beta_{pq}$ des jeweiligen Arrays einen Wert annimmt, der zwischen dem Quotienten Q1=1,1/n' und dem Quotienten Q2=1,8/n' liegt, so daß auf Grund der für das komplette sichtbare Spektrum lichttransmittierenden Filterelemente ($\beta_{pq}$) im Mittel pro sichtbarem Rasterabschnitt im Bezug auf die Bildelementfläche stets etwa 1,1 bis 1,8 Bildelemente ($\alpha_{ij}$) sichtbar sind. Versuche haben jedoch gezeigt, daß dies auch bei Quotienten, die größer als 1,8 sind, der Fall ist, beispielsweise bei 2.0.

In einer anderen Ausgestaltung der Erfindung entspricht der Ausschnitt bei Parallelprojektion auf das Raster aus Bildelementen $\alpha_{ij}$ mindestens einer Zeile j oder mindestens einer Spalte i. In einer bevorzugten Ausgestaltung, bei der ebenfalls der 3D-Eindruck nicht spürbar beeinträchtigt wird, ist bei Parallelprojektion eines genügend großen Filterabschnittes mindestens eines vorgesehenen Arrays aus Filterelementen $\beta_{pq}$ auf mindestens eine Zeile j oder auf mindestens eine Spalte i des Rasters mindestens die 1,1/n'-fache und höchstens jedoch die 1,8/n'-fache Fläche der entsprechenden Zeile j bzw. Spalte i von für das komplette sichtbare Spektrum im wesentlichen lichtdurchlässigen Filterelementen $\beta_{pq}$ bedeckt, so daß auf Grund der für das komplette sichtbare Spektrum lichttransmittierenden Filterelemente $\beta_{pq}$ im Mittel pro sichtbarem Rasterabschnitt im Bezug auf die Bildelementfläche stets etwa 1,1 bis 1,8 Bildelemente $\alpha_{ij}$ sichtbar sind.

In einer weiteren bevorzugten Ausgestaltung der Erfindung ist mindestens ein erster von einem Rand des Arrays zu einem gegenüberliegenden Rand reichender und ununterbrochen durchgängiger Gürtel von Transparentfiltern und mindestens ein zweiter von einem Rand des Arrays zu einem gegenüberliegenden Rand reichender und ununterbrochen durchgängiger Gürtel von Transparentfiltern vorgesehen, wobei die Hauptausbreitungsrichtungen dieser beiden Gürtel auf dem Array nicht-parallel zueinander ausgerichtet sind.

Unter Hauptausbreitungsrichtung wird in diesem Zusammenhang die Verbindungslinie zwischen zwei Transparentfiltern ein- und desselben Gürtels verstanden, die jeweils an entgegengesetzten Enden der Gürtel positioniert sind. Für den Fall, daß gleichzeitig mehrere Transparentfilter an einem Ende des Gürtels positioniert sind, ist der Flächenschwerpunkt der Gesamtfläche der entsprechenden Transparentfilter gemeint.

Hierbei verläuft vorzugsweise mindestens einer der vorgesehenen durchgängigen Gürtel von Transparentfiltern parallel zum oberen, unteren, linken oder rechten Rand des jeweiligen Arrays aus Filterelementen $\beta_{pq}$ und/oder parallel zum oberen, unteren, linken oder rechten Rand des Rasters aus Bildelementen $\alpha_{ij}$.

Vorteilhaft ist eine Vielzahl solcher durchgängiger Gürtel von Transparentfiltern vorgesehen.

Es sei an dieser Stelle angemerkt, daß die erfindungsgemäßen Anordnungen unter Umständen, wenn nämlich der oben genannte Quotient im Bereich der unteren Grenze bei etwa 1,1 /n' liegt, auch mit nur zwei dargestellten Ansichten $A_k$ funktionieren.

In einer weiteren Ausgestaltung ist mindestens ein Teil der durchgängigen Gürtel von Transparentfiltern zufällig über das Array verteilt angeordnet, insofern besagte Gürtel parallel zueinander liegen. Demgegenüber ist es jedoch auch möglich, daß mindestens ein Teil der durchgängigen Gürtel von Transparentfiltern in periodischen Abständen zueinander auf dem Array angeordnet ist, insofern besagte Gürtel parallel zueinander liegen, wobei bevorzugt jede m. Zeile q (mit m>1) oder aber jede m. Spalte p (mit m>1) des entsprechenden Arrays einen derartigen durchgängigen Gürtel von Transparentfiltern bildet.

In einer speziellen Ausgestaltung sind bei Parallelprojektion eines -aber nicht zwingend jedes- solchen durchgängigen Gürtels von Transparentfiltern in Betrachtungsrichtung auf das Raster aus Bildelementen $\alpha_{ij}$ vorwiegend solche Bildelemente $\alpha_{ij}$ von Transparentfiltern mindestens teilweise überdeckt, die zu einem überwiegenden Anteil oder ausschließlich Teilinformationen ein- und derselben Ansicht $A_k$ wiedergeben. Es ist aber auch möglich, daß mehrere solche Bildelemente $\alpha_{ij}$ von Transparentfiltern mindestens teilweise überdeckt sind, die Teilinformationen mindestens zweier verschiedener Ansichten $A_k$ wiedergeben.

Für alle erfindungsgemäßen Anordnungen wird die Zuordnung von Teilinformationen aus den Ansichten $A_k$ (k=l...n) zu Bildelementen $\alpha_{ij}$ der Position i,j bevorzugt nach der Funktion

$$k = i - c_{ij} \cdot j - n \cdot IntegerPart\left[\frac{i - c_{ij} \cdot j - 1}{n}\right],$$

vorgenommen, wobei i den Index eines Bildelementes $\alpha_{ij}$ in einer Zeile des Rasters bezeichnet, j den Index eines Bildelementes $\alpha_{ij}$ in einer Spalte des Rasters, und k die fortlaufende Nummer der Ansicht $A_k$ (k=1...n), aus der die Teilinformation stammt, die auf einem bestimmten Bildelement $\alpha_{ij}$ wiedergegeben werden soll. n entspricht der Gesamtzahl der jeweils verwendeten Ansichten $A_k$ (k=1...n), und $c_{ij}$ ist eine wählbare Koeffizientenmatrix zur Kombination bzw. Mischung der verschiedenen von den Ansichten $A_k$ (k=1...n) stammenden Teilinformationen auf dem Raster. Die Funktion IntegerPart liefert als Wert die größte ganze Zahl, die das in der Gleichung in eckige Klammern gesetzte Argument nicht übersteigt.

Ferner werden für vorgesehene Filterarrays die Filterelemente $\beta_{pq}$ in Abhängigkeit von ihrer Transparenzwellenlänge / ihrem Transparenzwellenlängenbereich / ihrem Transmissionsgrad $\lambda_b$ nach der Funktion

$$b = p - d_{pq} \cdot q - n_m \cdot IntegerPart\left[\frac{p - d_{pq} \cdot q - 1}{n_m}\right]$$

zu einem Maskenbild kombiniert, wobei p den Indes eines Filterelements $\beta_{pq}$ in einer Zeile des jeweiligen Arrays und q den Index eines Filterelements $\beta_{pq}$ in einer Spalte des jeweiligen Arrays bezeichnet. b ist eine ganze Zahl, die für ein Filterelement $\beta_{pq}$ an der Position (p,q) eine der vorgesehenen Transparenzwellenlängen / - wellenlängenbereiche bzw. Transmissionsgrade $\lambda_b$ festlegt und Werte zwischen 1 und $b_{max}$ haben kann, wobei $b_{max}$ eine natürliche Zahl größer als 1 ist. $n_m$ ist ein ganzzahliger Wert größer "Null", der bevorzugt der Gesamtzahl k in dem Kombinationsbild dargestellten Ansichten $A_k$ entspricht, und $d_{pq}$ eine wählbare Maskenkoeffizientenmatrix zur Variation der Erzeugung eines Maskenbildes. Die Funktion IntegerPart wurde bereits oben definiert.

Für die weiter unten beschriebenen Ausführungsbeispiele lassen sich entsprechende Maskenkoeffizientenmatrizen $d_{pq}$ bzw. Koeffizientenmatrizen $c_{ij}$ angeben. Dem knapperen Umfang geschuldet wird hier jedoch darauf verzichtet.

Bevorzugt ist genau ein Array aus Filterelementen $\beta_{pq}$ vorgesehen und der Abstand z zwischen dem besagtem Array und dem Raster aus Bildelementen $\alpha_{ij}$, in Normalenrichtung gemessen, wird nach folgender Gleichung festgelegt:

$$\frac{p_d}{s_p} = \frac{d_a \pm z}{z}.$$

Darin bezeichnet $s_p$ den mittleren horizontalen Abstand zwischen zwei benachbarten Bildelementen $\alpha_{ij}$. Liegt das Filterarray in Blick- oder Normalenrichtung vor dem Raster aus Bildelementen $\alpha_{ij}$, so wird z von $d_a$ subtrahiert; liegt das Filterarray dahinter, so wird z zu $d_a$ addiert. $p_d$ ist die mittlere Pupillendistanz bei einem Betrachter und $d_a$ ein wählbarer Betrachtungsabstand.

Typische Abstände z liegen etwa im Bereich von 1 mm bis zu 25 mm; andere, insbesondere größere Abstände sind jedoch ebenso denkbar.

In einer vorteilhaften Ausgestaltung sind alle auf dem bzw. den Filterarrays vorgesehenen Filterelemente gleich groß. Der Flächeninhalt eines Filters bzw. eines Filterelementes kann in diesem Zusammenhang in der Regel eine Fläche von einigen tausend Quadratmikrometern bis hin zu einigen Quadratmillimetern aufweisen. Die Filterelemente bzw. Filter $\beta_{pq}$ weisen vieleckige, bevorzugt rechteckige Umrisse auf. Ferner können die Umrisse gleichfalls geschwungene Linien beinhalten.

Auch für die Bildelemente $\alpha_{ij}$ sind andere Formen, beispielsweise vieleckige Formen oder Streifen nach Art eines Fischgrätenmusters wie bei einem sogenannten Dual-Domain-Display, denkbar. Dies impliziert, daß die Anzahl der vorgesehenen Filterelemente $\beta_{pq}$ auf einem Filterarray stark von der Anzahl der Bildelementen $\alpha_{ij}$ abweichen kann.

Für den Fall, daß keine zufällige Anordnung von Transparentfiltergürteln vorgesehen ist, weisen die auf dem bzw. den Filterarrays vorgesehenen Filterelemente $\beta_{pq}$ bevorzugt jeweils eine im wesentlichen periodische Anordnung auf.

In einer weiteren vorteilhaften Ausgestaltung sind die Lichtausbreitungsrichtungen für die jeweils auf den Bildelementen $\alpha_{ij}$ wiedergegebene Teilinformation in Abhängigkeit ihrer Wellenlänge / ihres Wellenlängenbereichs vorgegeben.

Eine weitere Ausgestaltung sieht vor, daß auf mindestens einem der vorgesehenen Arrays aus Filterelementen in mindestens einer Zeile q des Arrays unmittelbar benachbarte Transparentfilter an eine andere Anzahl unmittelbar benachbart positionierter Transparentfilter auf der Zeile q-1 angrenzen, als auf der Zeile q+1. Auf diese Weise werden die Ansichtenübergänge bei einer Betrachterbewegung beeinflußt.

Bevorzugt ist jedes der vorgesehenen Filterarrays als statisches, zeitlich unveränderliches Filterarray ausgebildet und im wesentlichen in einer fixen Relativposition zum Raster aus Bildelementen $\alpha_{ij}$, d.h. dem Bildgeber, angeordnet.

Bei einer weiteren, spezielleren Ausgestaltung der vorgenannten erfindungsgemäßen Anordnungen gibt mindestens ein Bildelement $\alpha_{ij}$ eine aus Teilinformationen mindestens zweier verschiedener Ansichten $A_k$ gemischte Bildinformation wieder, beispielsweise mittels eines der in der WO 03/024112 der Anmelderin beschriebenen Verfahren.

Bei den bislang beschriebenen erfindungsgemäßen Anordnungen kann der Bildgeber beispielsweise ein LC-Display, ein Plasmadisplay oder ein OLED-Bildschirm sein. Dies schließt jedoch nicht aus, daß es sich bei dem Bildgeber auch um andersartige Geräte handeln kann.

Bei besonderen Anwendungen kann es überdies gewünscht sein, ganz oder teilweise zwischen einem 2D- und 3D-Modus umzuschalten. Hierzu kommt jede der bislang beschriebenen Anordnungen in Frage, wobei eine transluzente Bildwiedergabeeinrichtung, beispielsweise ein LC-Display, sowie genau ein Array aus Filterelementen vorgesehen ist, welches sich in Betrachtungsrichtung zwischen der Bildwiedergabeeinrichtung und einer Planbeleuchtungseinrichtung befindet. Fernerhin ist eine schaltbare Streuscheibe zwischen der Bildwiedergabeeinrichtung und dem Filterarray vorgesehen, so daß in einer ersten Betriebsart, in welcher die schaltbare Streuscheibe transparent geschaltet ist, für den/die Betrachter ein räumlicher Eindruck erzeugt wird, während in einer zweiten Betriebsart, in welcher die schaltbare Streuscheibe mindestens teilweise streuend geschaltet ist, die Wirkung des Arrays aus Filterelementen weitestgehend aufgehoben ist, so daß das gestreute Licht eine weitestgehend homogene Beleuchtung der Bildwiedergabeeinrichtung ermöglicht und auf dieser zweidimensionale Bildinhalte in voller Auflösung wahrnehmbar dargestellt werden können. In besagtem zweiten Modus werden demnach an den entsprechenden Teilflächen, auf denen die Streuscheibe streuend geschaltet ist, keine Lichtausbreitungsrichtungen mehr vorgegebenen, so daß beide Augen des jeweiligen Betrachters im wesentlichen die gleichen Bildteilinformationen sehen. Vorteilhaft wird an den entsprechenden 2D-Stellen auf dem Bildgeber auch nur zweidimensionale Bildinformation, d.h. kein aus mehreren Ansichten zusammengesetztes Bild dargeboten.

Ferner kann zur 2D-3D-Umschaltung mindestens ein Array aus Filterelementen vorgesehen sein, welches mindestens teilweise als Wellenlängen- bzw. Graustufenfilter wirkende Pixel mit einem elektrochromen oder photochromen Aufbau beinhaltet, wobei das Array in einer ersten Betriebsart für die 3D-Darstellung insbesondere auch unter Verwendung der elektrochrom bzw. photochrom aufgebauten Pixel eine zur räumlichen Darstellung geeignete Filterarraystruktur exhibiert, während in einer zweiten Betriebsart die elektrochrom bzw. photochrom aufgebauten Pixel so transparent wie möglich, bevorzugt für das komplette sichtbar Spektrum im wesentlichen vollständig transparent, geschaltet werden.

Dabei können sowohl elektrochrom bzw. photochrom aufgebaute als auch in ihren Transmissionseigenschaften unveränderliche Wellenlängen- bzw. Graustufenfilter vorgesehen sein, wobei die unveränderlichen Filter bevorzugt für das komplette sichtbare Spektrum im wesentlichen vollständig transparent ausgebildet sind.

## Kurze Beschreibung der Zeichnungen:

Die Erfindung wird im folgenden an Hand von Zeichnungen näher erläutert. Es zeigt:

| | |
|---|---|
| Fig.1a | ein Filterarray in einer ersten Ausgestaltung der Erfindung, |
| Fig.1b | die schematische Zusammensetzung von transparenten Filterabschnitten aus mehreren transparenten Filterelementen, |
| Fig.1c | eine schematische Darstellung der Ausgestaltung erfindungsgemäßer Anordnungen, |
| Fig.2 | eine mögliche Bildkombination zur Erzielung eines räumlichen Eindrucks in Verbindung mit einem Filterarray der ersten Ausgestaltung, |
| Fig.3 und Fig.4 | Beispiele für mögliche für die beiden Betrachteraugen sichtbaren Bildelemente bzw. Bildelementteilflächen bei Zugrundelegung der Verhältnisse nach Fig.1a und Fig.2, |
| Fig.5 | ein weiteres Beispiel der Bildkombination, |
| Fig.6 | ein in Verbindung mit der Bildkombinationsvorschrift nach Fig.5 für die räumliche Darstellung sehr gut geeignetes Filterarray, |
| Fig.7 und Fig.8 | Beispiele für mögliche für die beiden Betrachteraugen sichtbaren Bildelemente bzw. Bidelementteilflächen bei Zugrundelegung der Verhältnisse nach Fig.5 und Fig.6, |
| Fig.9 | ein weiteres Beispiel der Bildkombination, |
| Fig.10 | ein in Verbindung mit der Bildkombinationsvorschrift nach Fig.9 für die räumliche Darstellung sehr gut geeignetes Filterarray, |
| Fig.11 und Fig.12 | Beispiele für mögliche für die beiden Betrachteraugen sichtbaren Bildelemente bzw. Bildelementteilflächen bei Zugrundelegung der Verhältnisse nach Fig.9 und Fig.10, |
| Fig.13a | ein Filterarray in einer weiteren Ausgestaltung der Erfindung, vorzugsweise anzuwenden mit einer Bildkombinationsvorschrift nach Fig.9, |
| Fig.13b | die schematische Zusammensetzung von transparenten Filterabschnitten aus mehreren transparenten Filterelementen, äquivalent zu dem Filterarray gezeigt in Fig.13a, |
| Fig.14 | ein Beispiel für mögliche für ein Betrachterauge sichtbaren Bildelemente bzw. Bildelementteilflächen bei Zugrundelegung der Verhältnisse nach Fig.9 und Fig.13a, |

EP 1 600 007 B1

| Fig.15 | ein Filterarray in einer weiteren Ausgestaltung der Erfindung, vorzugsweise anzuwenden mit einer Bildkombinationsvorschrift nach Fig.9, |
| Fig.16 | ein Beispiel für mögliche für ein Betrachterauge sichtbaren Bildelemente bzw. Bildelementteilflächen bei Zugrundelegung der Verhältnisse nach Fig.9 und Fig.15, |
| Fig.17 | ein Filterarray in einer weiteren Ausgestaltung der Erfindung, vorzugsweise anzuwenden mit einer Bildkombinationsvorschrift nach Fig.9, |
| Fig.18 | ein Beispiel für mögliche für ein Betrachterauge sichtbare Bildelemente bzw, Bildelementteilflächen bei Zugrundelegung der Verhältnisse nach Fig.9 und Fig.17, |
| Fig.19 | ein weiteres Beispiel der Bildkombination, |
| Fig.20 | ein in Verbindung mit der Bildkombinationsvorschrift nach Fig.19 für die räumliche Darstellung sehr gut geeignetes Filterarray, |
| Fig.21 und Fig.22 | Beispiele für mögliche für die beiden Betrachteraugen sichtbaren Bildelemente bzw. Bildelementteilflächen bei Zugrundelegung der Verhältnisse nach Fig.19 und Fig.20, |
| Fig.23 | ein weiteres Beispiel der Bildkombination, |
| Fig.24 | ein in Verbindung mit der Bildkombinationsvorschrift nach Fig.23 für die räumliche Darstellung sehr gut geeignetes Filterarray, |
| Fig.25 und Fig.26 | Beispiele für mögliche für die beiden Betrachteraugen sichtbaren Bildelemente bzw. Bildelementteilflächen bei Zugrundelegung der Verhältnisse nach Fig.23 und Fig.24, |
| Fig.27 | ein weiteres Beispiel der Bildkombination, |
| Fig.28 | ein in Verbindung mit der Bildkombinationsvorschrift nach Fig.27 für die räumliche Darstellung sehr gut geeignetes Filterarray mit horizontalen Transparentfiltergürteln gemäß der dritten Ausgestaltung der erfindungsgemäßen Anordnungen, |
| Fig.29 und Fig.30 | Beispiele für mögliche für die beiden Betrachteraugen sichtbaren Bildelemente bzw. Bildelementteilflächen bei Zugrundelegung der Verhältnisse nach Fig.27 und Fig.28, |
| Fig.31 | ein weiteres Beispiel der Bildkombination, |
| Fig.32 | ein in Verbindung mit der Bildkombinationsvorschrift nach Fig.31 für die räumliche Darstellung sehr gut geeignetes Filterarray mit vertikalen Transparentfiltergürteln gemäß der dritten Ausgestaltung der erfindungsgemäßen Anordnungen, |
| Fig.33 und Fig.34 | Beispiele für mögliche für die beiden Betrachteraugen sichtbaren Bildelemente bzw. Bildelementteilflächen bei Zugrundelegung der Verhältnisse nach Fig.31 und Fig.32, |
| Fig.35 | ein weiteres Filterarray, welches den Anforderungen der ersten und zweiten Ausgestaltungen der Erfindung gerecht werden kann, beinhaltend R', G', B'-Filter und Graustufenfilter, |
| Fig. 36 | eine weitere mögliche Ausgestaltung für ein Filterarray, |
| Fig. 37 | die schematische Zusammensetzung von transparenten Filterabschnitten aus transparenten Filterelementen, wie sie in Fig. 36 verwendet werden, |
| Fig. 38 | die in Fig. 37 verwendeten Filterelemente im einzelnen, |
| Fig. 39 und Fig. 40 | Beispiele für mögliche, für jeweils eines der beiden Betrachteraugen sichtbaren Bildelemente bzw. Bildelementteilflächen bei Zugrundelegung der Verhältnisse nach Fig.36, |
| Fig. 41 | ein weiteres Beispiel mit einer Bildkombination aus sechs Ansichten, |
| Fig. 42 | ein Filterarray zur Verwendung mit der in Fig. 41 gezeigten Bildkombination, sowie |
| Fig. 43 und Fig. 44 | Beispiele für mögliche, für jeweils eines der beiden Betrachteraugen sichtbaren Bildelemente bzw. Bildelementteilflächen bei Zugrundelegung der Verhältnisse nach Fig.41. |

## Ausführliche Beschreibung der Zeichnungen

Alle Zeichnungen sind nicht maßstäblich und -je nach Sachlage- vergrößert oder verkleinert dargestellt. Bei einigen Zeichnungen handelt es sich um schemenhafte Prinzipskizzen bzw. um Ausschnittdarstellungen.

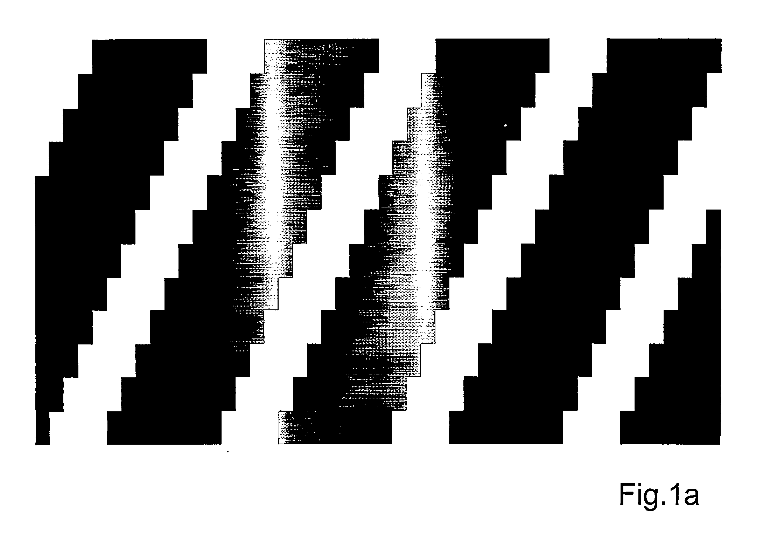

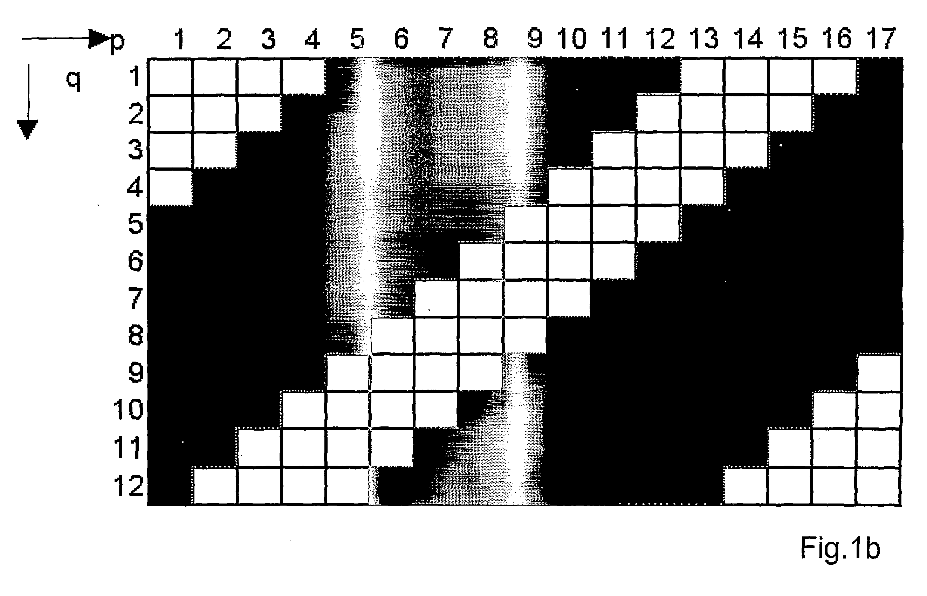

Die Fig.1a stellt - als Ausschnitt - ein Filterarray in einer ersten Ausgestaltung der erfindungsgemäßen Anordnung dar. Das Filterarray ist aus einer Vielzahl von Wellenlängenfiltern aufgebaut. Hierbei sind nur für das sichtbare Spektrum im wesentlichen transparente und opake Filter bzw. Filterelemente vorgesehen. Wie in Fig.1b ersichtlich wird, sind die transparenten Filterabschnitte des aus Fig.1a bekannten Filterarrays aus mehreren transparenten Filterelementen zusammengesetzt. Die Abmessungen der (kleinsten) Transparentfilterelemente sind hier bei Fig.1b ungefähr 0,0997151 mm Breite und 0,2991453 mm Höhe, insofern als Raster aus Bildelementen ein 15.1"LC-Display vom Typ LG mit einer Auflösung von 1024x768 Bildpunkten bei 0,3 mm x 0,3 mm Vollfarbpixelgröße verwendet wird. Die Maße für die zusammengesetzten Transparentfilterabschnitte, die in Fig.1a ersichtlich sind, sind somit inhärent gegeben. Das Filterarray hat in etwa die gleiche flächenmäßige Ausdehnung, wie die aktive Bildfläche eines LC-Displays oder allgemein des Bildgebers.

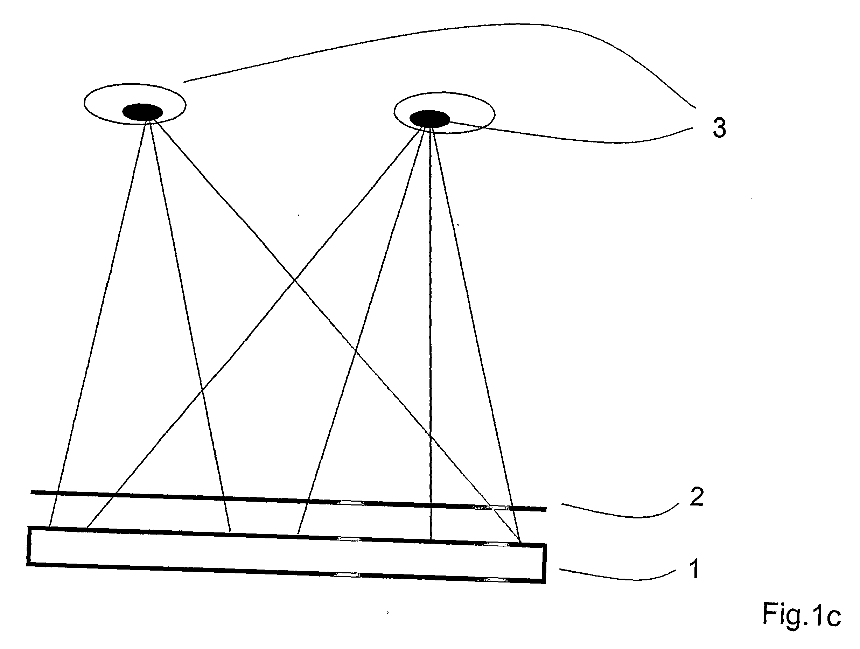

Im folgenden wird auf Fig.1c Bezug genommen, in der schematisch angedeutete Betrachteraugen 3 auf ein Filterarray 2 blicken. Wird nun das gezeigte Filterarray 2 wie in Fig.1c gezeigt vor einem Raster 1 aus Zeilen j und Spalten i von Bildelementen $\alpha_{ij}$ angeordnet, so ist die erfindungsgemäße Anordnung in einer Ausgestaltung implementiert, bei der der Quotient aus der Summe der Flächenanteile von Filterelementen $\beta_{pq}$, die für Licht des im wesentlichen gesamten sichtbaren Spektrums weitestgehend durchlässig sind, und der Summe der Flächenanteile aller Filterelemente $\beta_{pq}$ des jeweiligen Arrays einen Wert annimmt, der zwischen dem Quotienten Q1=1,1/n' und dem Quotienten Q2=1,8/n' liegt, so daß auf Grund der für das komplette sichtbare Spektrum lichttransmittierenden Filterelemente $\beta_{pq}$ im Mittel pro sichtbarem Rasterabschnitt im Bezug auf die Bildelementfläche stets etwa 1,1 bis 1,8 Bildelemente $\alpha_{ij}$ sichtbar sind. Die in vorgegebenen Wellenlängenbereichen lichtdurchlässigen Filterelemente sind als Transparentfilter ausgestaltet.

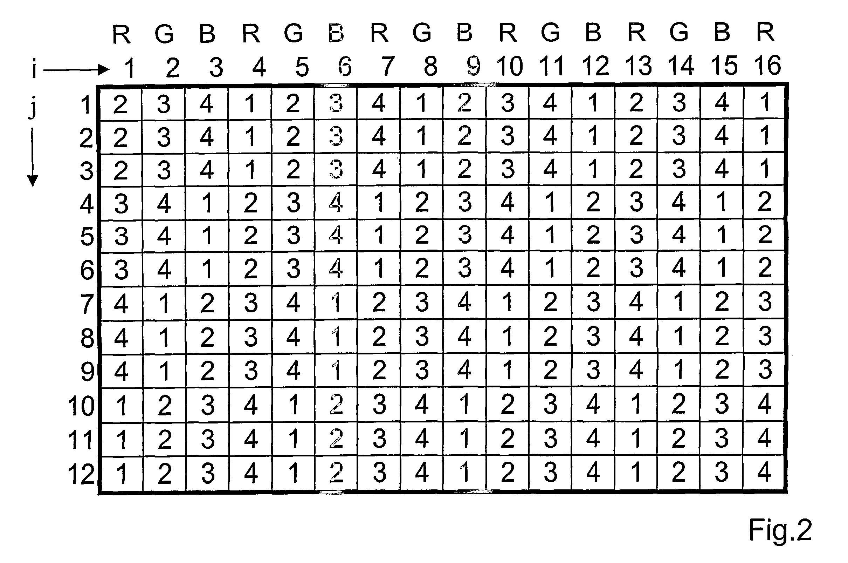

Hierzu wird auf dem Raster aus Bildelementen ein aus vier Ansichten nach der in Fig.2 gezeigten Bildkombinationsvorschrift zusammengesetztes Bild verwendet. Die Spalten R, G, B bedeuten hier und in weiteren Zeichnungen rote, grüne und blaue Subpixelspalten (bzw. ggf. auch -zeilen). Die durchschnittliche Anzahl von verschiedenen pro Zeile i des Rasters auf den Bildelementen $\alpha_{ij}$ zur Darstellung kommenden Ansichten n' ist demnach in diesem Falle n' =4.

Wird nun beispielsweise nach Fig.1b ein 12x12-Feld der kleinsten Filterelemente, deren Raster hier erkennbar ist, ausgewählt, so beträgt auf (dem einen vorgesehenen) Array der Quotient aus der Summe der Flächenanteile von Filterelementen $\beta_{pq}$, die für Licht des im wesentlichen gesamten sichtbaren Spektrums weitestgehend durchlässig sind, und der Summe der Flächenanteile aller Filterelemente $\beta_{pq}$ den Wert 48/144=1/3. Unter Zugrundelegung von n'=4 liegt besagter Quotient 1/3 wie gefordert zwischen dem Quotienten Q1=1,1/n'=0,275 und dem Quotienten Q2=1,8/n'=0,45.

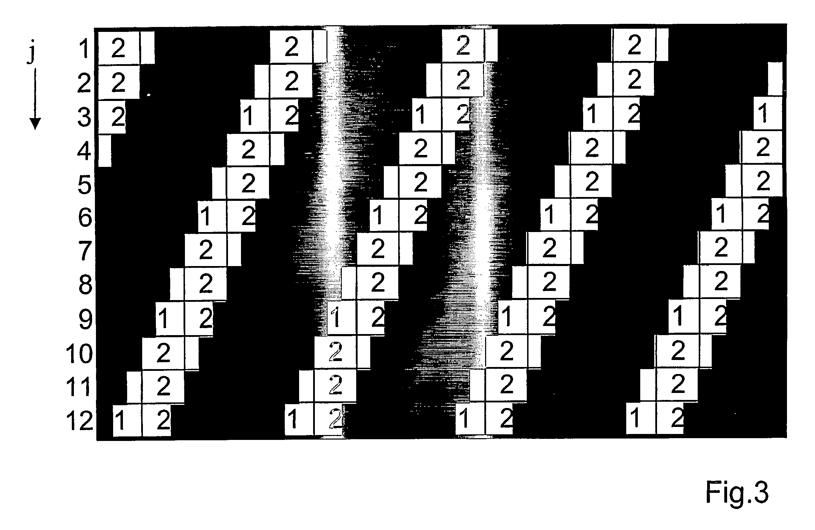

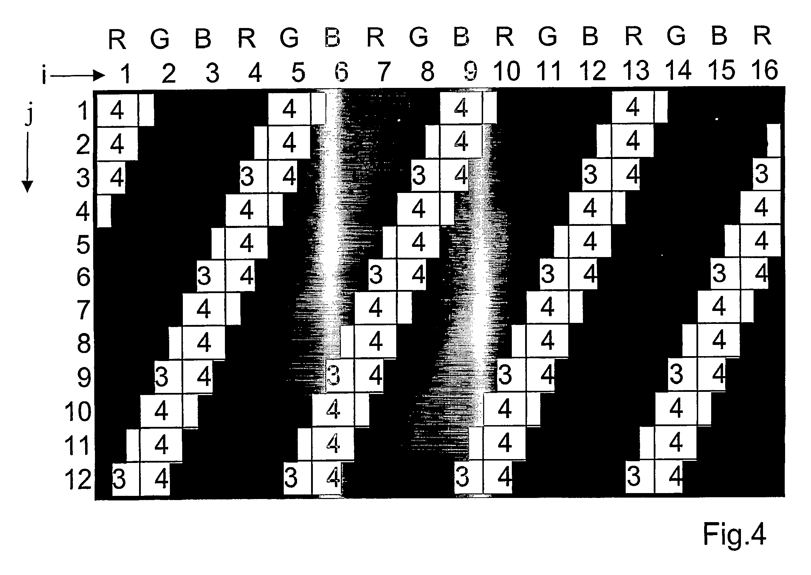

Die Fig.3 und Fig.4 zeigen Beispiele für mögliche, für die beiden Betrachteraugen sichtbaren Bildelemente bzw. Bildelementteilflächen bei Zugrundelegung der Verhältnisse nach Fig.1a und Fig.2. Aus diesen wird ersichtlich, daß auf Grund der für das komplette sichtbare Spektrum transmittierenden Filterelemente $\beta_{pq}$, d.h. der Transparentfilter, im Mittel pro sichtbarem Rasterabschnitt im Bezug auf die Bildelementfläche stets etwa 1,1 bis 1,8 Bildelemente $\alpha_{ij}$ sichtbar sind, hier genauer gesagt etwa 1,33 Bildelemente $\alpha_{ij}$. Beispielsweise grenzen an das linke obere sichtbare Bildelement an der Stelle (1,1) in Fig.3 noch ca. 0,33 sichtbare Bildelemente (bezogen auf die Bildelementfläche) des rechts benachbarten Bildelementes.

Auf Grund der hier vorliegenden Sichtverhältnisse (siehe Fig.3) sieht ein Betrachter z.B. eine Auswahl bestehend aus den Ansichten $A_k$ mit k=1, 2, 3 im Verhältnis der sichtbaren Flächenanteile von 3:8:1 zueinander. Das andere Auge des Betrachters, dessen Sichtverhältnisse beispielhaft in Fig.4 illustriert sind, würde beispielsweise eine Auswahl bestehend aus den Ansichten $A_k$ mit k=3, 4, 1 im Verhältnis der sichtbaren Flächenanteile von 3:8:1 zueinander sehen.

An dieser Stelle sei angemerkt, daß auf Grund der Sichtverhältnisse bei den erfindungsgemäßen Anordnungen die 2D-Textlesbarkeit gegenüber 3D-Anordnungen und -verfahren im Stand der Technik weiter verbessert ist.

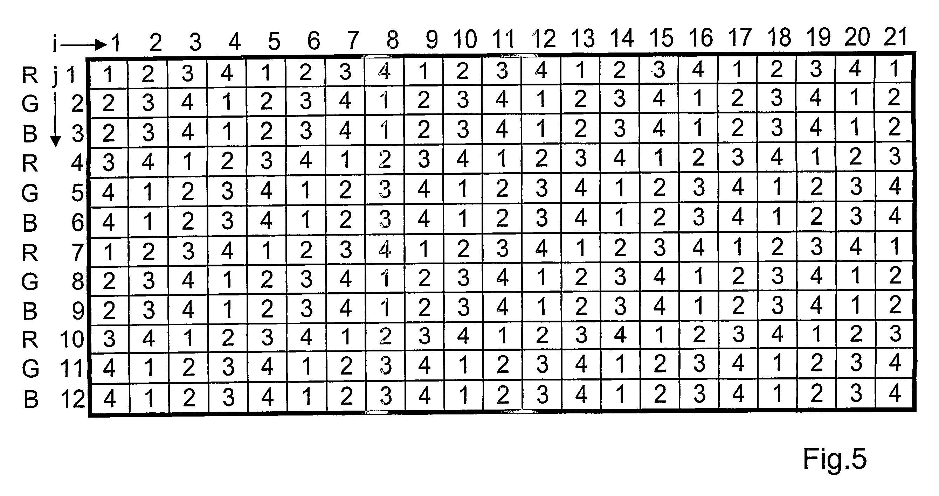

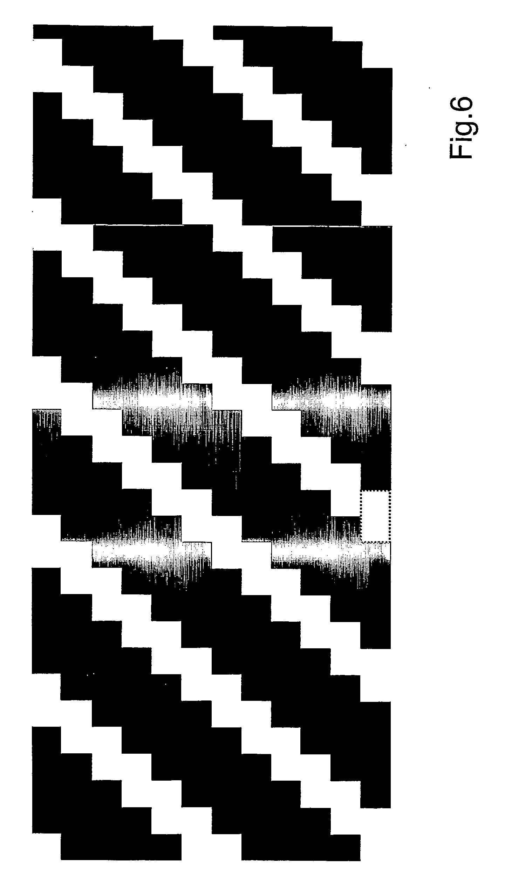

Die Fig.5 zeigt ein weiteres Beispiel der Bildkombination, besonders geeignet für ein mobil einsetzbares Display, wie das eines PDA (Personal Digital Assistent) oder eines Mobiltelefons. Aus der Fig.6 ist ein in Verbindung mit der Bildkombinationsvorschrift nach Fig.5 für die räumliche Darstellung sehr gut geeignetes Filterarray ersichtlich, mit dem sich eine Ausgestaltung realisieren läßt, bei der bei Parallelprojektion eines genügend großen Filterabschnittes mindestens eines vorgesehenen Arrays aus Filterelementen $\beta_{pq}$ auf mindestens eine Zeile j oder auf mindestens eine Spalte i des Rasters mindestens die 1,1/n'-fache und höchstens jedoch die 1,8/n'-fache Fläche der entsprechenden Zeile j bzw. Spalte i von für das komplette sichtbare Spektrum im wesentlichen lichtdurchlässigen Filterelementen $\beta_{pq}$ bedeckt ist, so daß auf Grund der für das komplette sichtbare Spektrum lichttransmittierenden Filterelemente $\beta_{pq}$ im Mittel pro sichtbarem Rasterabschnitt im Bezug auf die Bildelementfläche stets etwa 1,1 bis 1,8 Bildelemente $\alpha_{ij}$ sichtbar sind. Die in vorgegebenen Bereichen lichtdurchlässigen Filterelemente sind ebenfalls als Transparentfilter ausgestaltet.

Bezugnehmend auf Fig.5 ist die durchschnittliche Anzahl von verschiedenen pro Zeile i des Rasters auf den Bildelementen $\alpha_{ij}$ zur Darstellung kommenden Ansichten hier ebenfalls wieder n'=4.

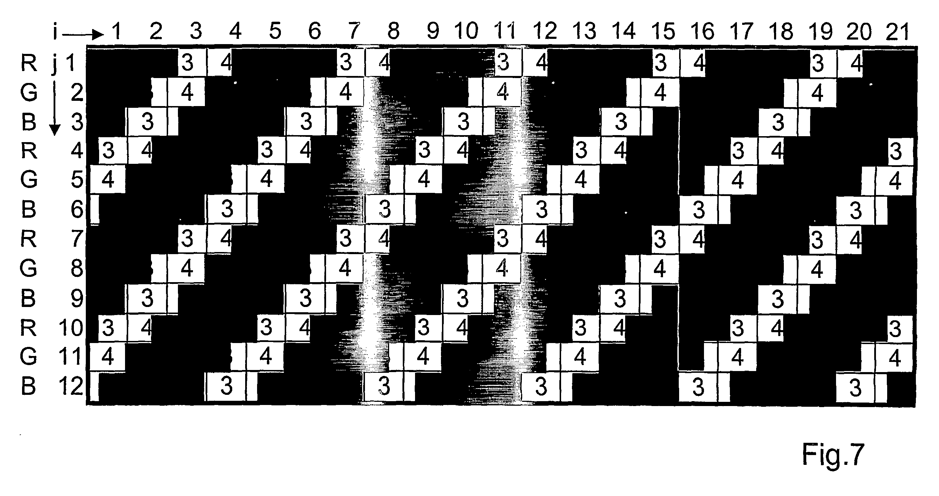

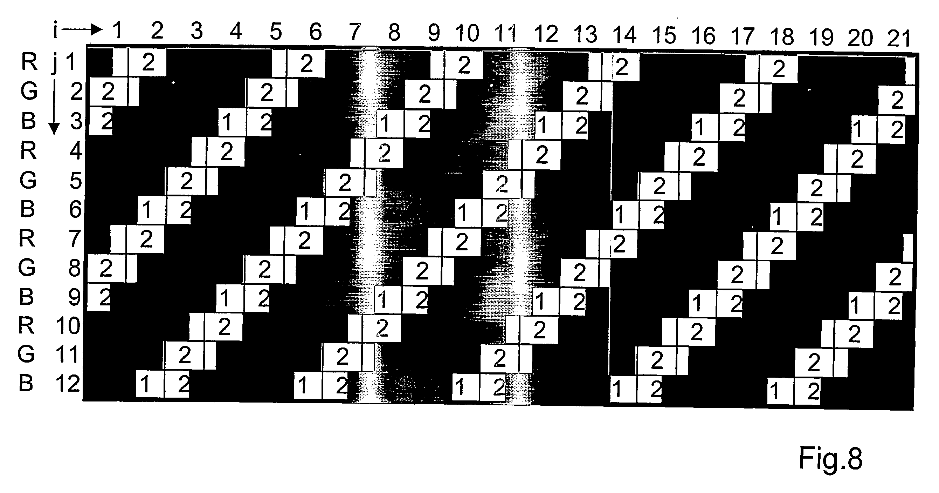

Während die Fig.7 und Fig.8 Beispiele für mögliche für die beiden Betrachteraugen sichtbaren Bildelemente bzw. Bildelementteilflächen bei Zugrundelegung der Verhältnisse nach Fig.5 und Fig.6 bzw. bezüglich einer Relativanordnung nach Fig.1c zeigen, lassen sich erstgenannte Zeichnungen auch zur Illustration der geforderten Eigenschaften heranziehen:

Insofern der Abstand z zwischen dem Filterarray und dem Raster aus Bildelementen nicht allzu groß, d.h. in bezug auf den gewählten Betrachtungsabstand $d_a$ für die Betrachteraugen 3 etwa kleiner einem Prozent, ist, geben die Zeichnungen Fig.7 und Fig.8 gleichsam in etwa Parallelprojektionen des Filterarrays auf das Raster aus Bildelementen $\alpha_{ij}$ wieder.

Betrachtet man in Fig.7 oder Fig.8 diese (Quasi-)Parallelprojektionen des jeweils gezeigten Filterabschnittes (der als genügend groß angesehen werde) des Arrays aus Filterelementen auf die Spalte i=1 des Rasters aus Bildelementen $\alpha_{ij}$, so wird ersichtlich, daß etwa ein Drittel der Fläche der Spalte i von Transparentfiltern bedeckt ist. Damit ist die Forderung, daß mindestens die 1,1/n'-fache und höchstens jedoch die 1,8/n'-fache Fläche der entsprechenden Spalte i von Transparentfiltern bedeckt ist, erfüllt, da 1,1 /4 < 1/3 < 1,8 /4 gilt.

Damit sind auf Grund der besagten Transparentfilterelemente $\beta_{pq}$ im Mittel pro sichtbarem Rasterabschnitt im Bezug auf die Bildelementfläche stets etwa 1,1 bis 1,8 - hier genauer gesagt 1,33 - Bildelemente $\alpha_{ij}$ sichtbar.

Diese Betrachtung ließe sich analog auch für die Zeilen durchführen.

Als Besonderheit bei der Bildkombination nach Fig.5 ist zu bemerken, daß es sich um RGB-Farbsubpixelzeilen und nicht wie bei vielen LCD-Bildschirmen um RGB-Farbsubpixelspalten handelt. Eine derartiger Bildaufbau ist beispielsweise bei einem PDA (Personal Digital Assistent) vom Typ Compaq iPAQ 3600 Pocket PC vorhanden; besagter PDA-Typ eignet sich daher hervorragend für die 3D-Darstellung in Verbindung mit den zuvor geschilderten Anwendungen. Die Filterabmessungen sind hier - entsprechend dem in Fig.6 gestrichelten Rechteck - beispielsweise 0,319607 mm Breite und 0,079922 mm Höhe.

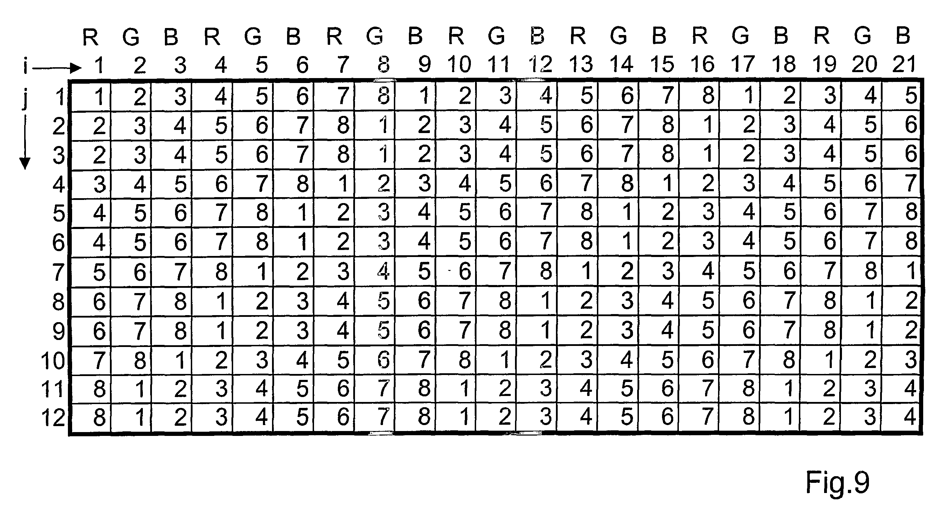

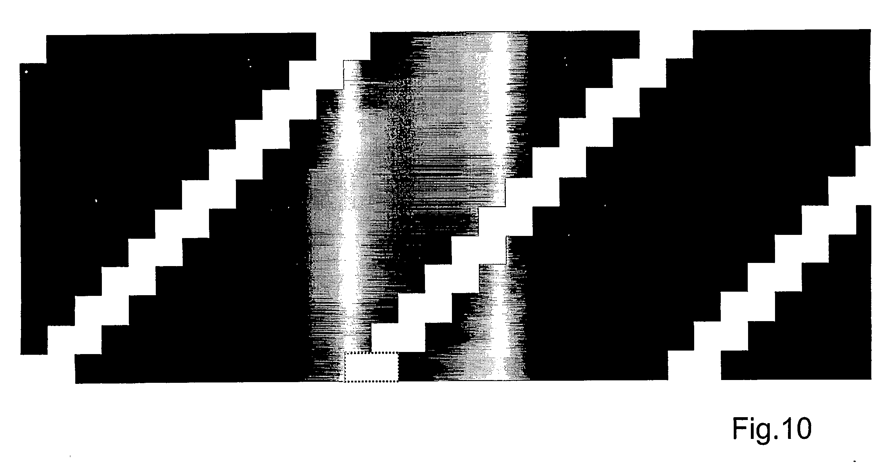

Im Sinne der eben genannten Ausgestaltung wird im folgenden ein weiteres Beispiel angeführt: Die Fig.9 zeigt ein weiteres Beispiel der Bildkombination und die Fig.10 ein in Verbindung mit der Bildkombinationsvorschrift nach Fig. 9 für die räumliche Darstellung sehr gut geeignetes Filterarray. Auch hier sind die charakteristischen Forderungen für die erfindungsgemäße Anordnung erfüllt, wie sich leicht nachweisen läßt. Als Raster aus Bildelementen $\alpha_{ij}$ kommt hier z.B. ein Plasma-Display vom Typ Pioneer PDP 503 MXE in Frage. Die Filterabmessungen sind hier - entsprechend dem in Fig.10 gestrichelten Rechteck - beispielsweise 0,379646 mm Breite und 0,80442478 mm Höhe.

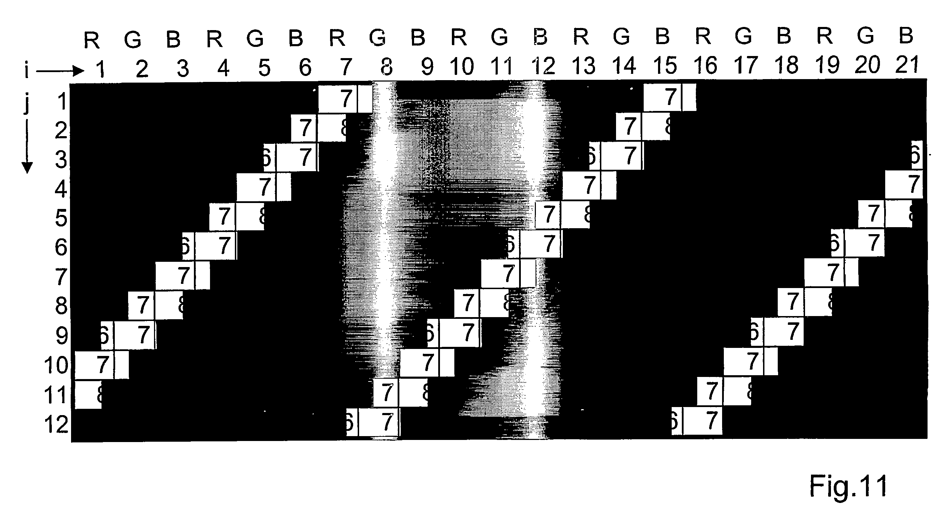

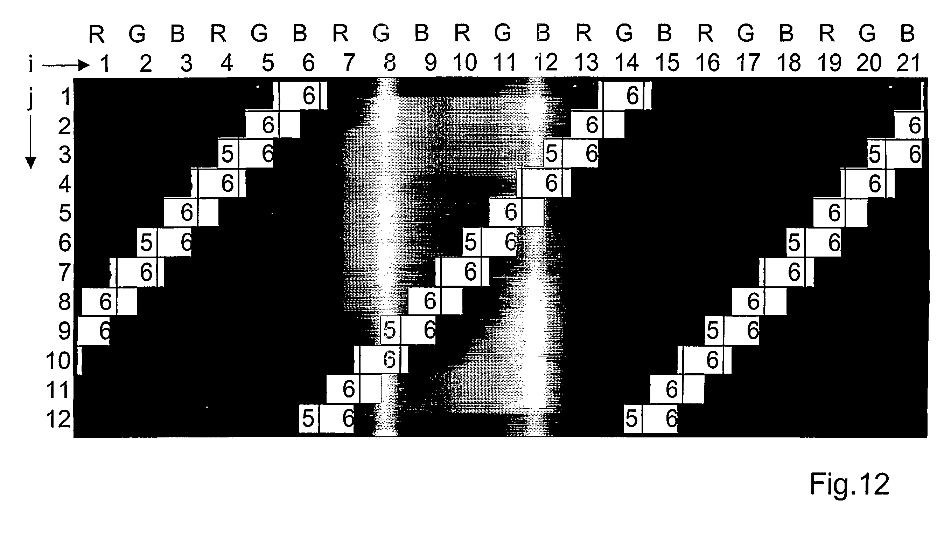

Schließlich geben die Fig.11 und Fig.12 Beispiele für mögliche für die beiden Betrachteraugen sichtbaren Bildelemente bzw. Bildelementteilflächen bei Zugrundelegung der Verhältnisse nach Fig.9 und Fig.10 wieder.

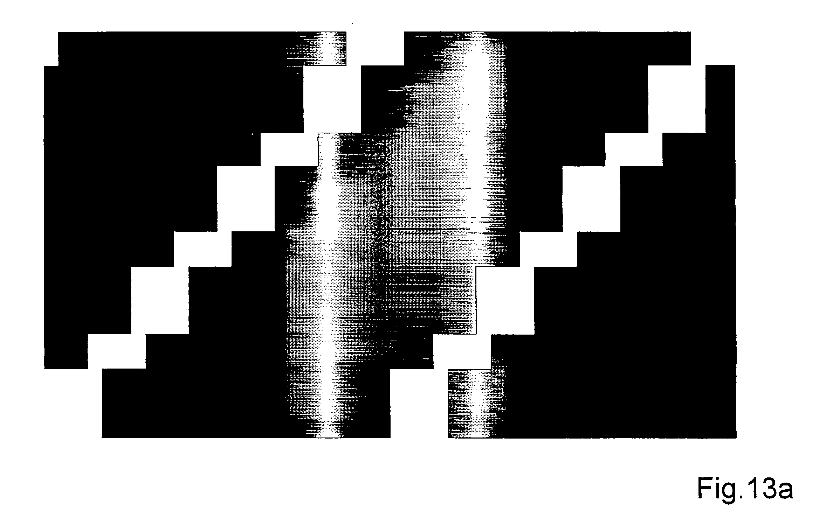

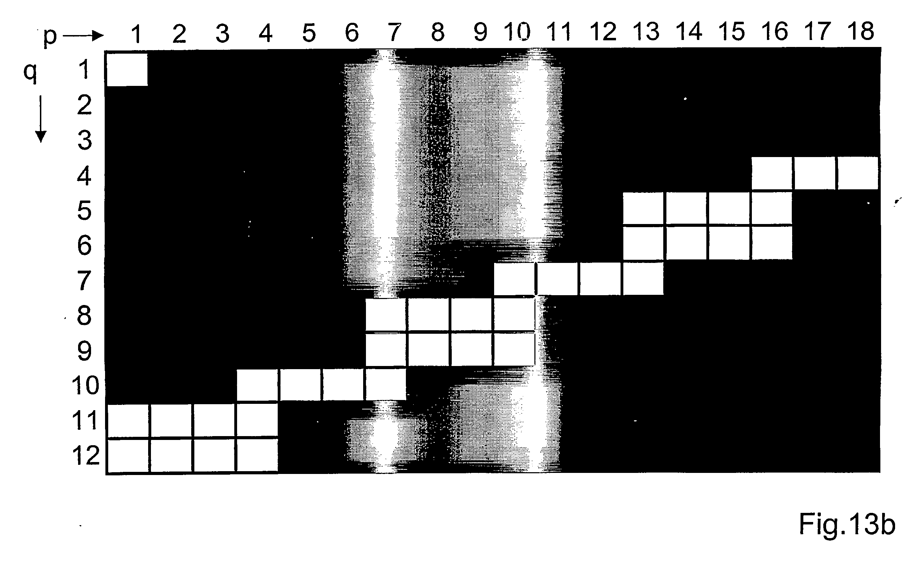

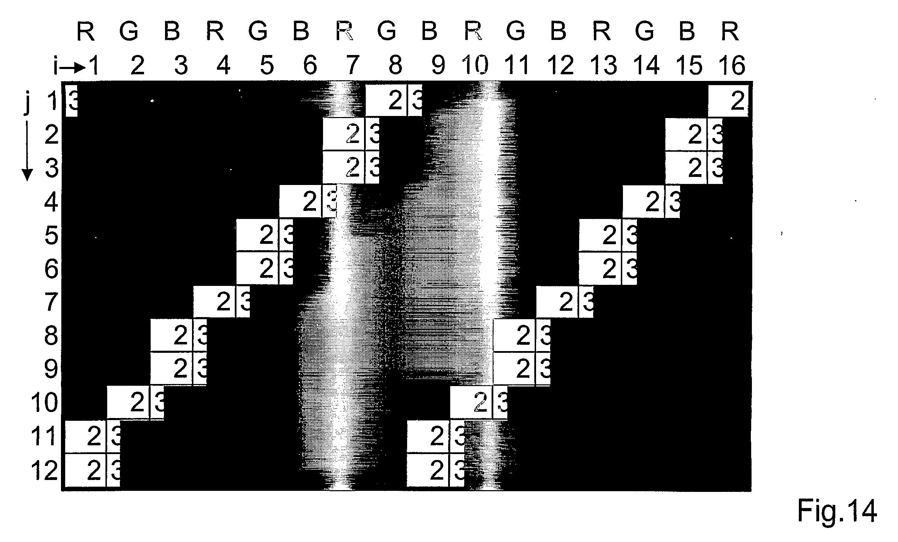

Ein wiederum anderes Beispiel für ein Filterarray im Sinne der Erfindung ist in Fig.13a gezeigt. Dieses Filterarray ist vorzugsweise mit einer Bildkombinationsvorschrift nach Fig.9 anzuwenden. Des besseren Verständnisses halber zeigt Fig.13b die schematische Zusammensetzung von transparenten Filterabschnitten aus mehreren transparenten Filtern bzw. Filterelementen. Das Filterarray in Fig.13b ist äquivalent zu dem Filterarray der Fig.13a. Diesbezüglich gibt die Fig.14 ein Beispiel der für ein Betrachterauge sichtbaren Bildelemente bzw. Bildelementteilflächen bei Zugrundelegung der Verhältnisse nach Fig.9 und Fig.13a wieder.

Bei dem Filterarray nach Fig.13a bzw. Fig.13b ist im übrigen der Fall verwirklicht, daß auf mindestens einem der vorgesehenen Arrays aus Filterelementen in mindestens einer Zeile q des Arrays unmittelbar benachbarte Transparentfilter an eine andere Anzahl unmittelbar benachbart positionierter Transparentfilter auf der Zeile q-1 angrenzen, als auf der Zeile q+1. Beispielsweise in Zeile q=8 in Fig.13b wird ersichtlich, daß die gezeigten unmittelbar benachbarten vier Transparentfilter an vier unmittelbar benachbarte Transparentfilter der Zeile q+1=9 grenzen, während sie an nur ein Transparentfilter der vier unmittelbar benachbarten Transparentfilter der Zeile q-1=7 angrenzen.

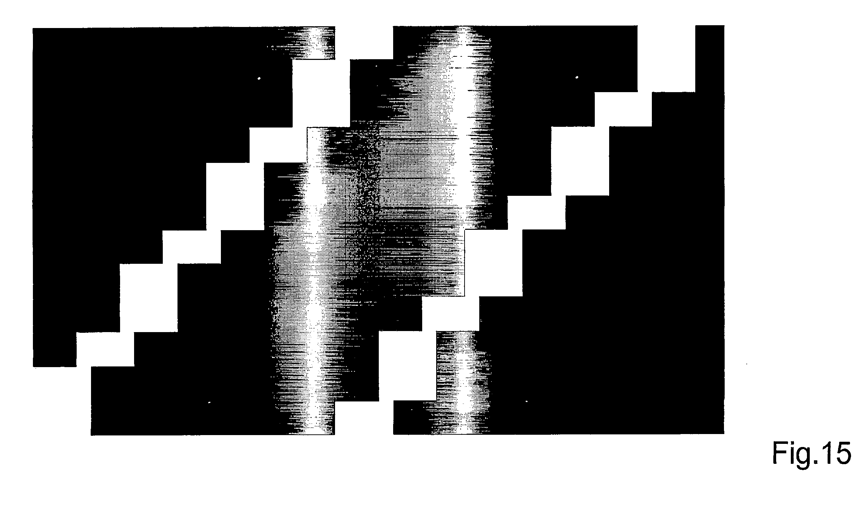

Weiterhin ist ein beispielhaftes Filterarray im Sinne der Erfindung in Fig.15 gezeigt. Dieses Filterarray ist ebenfalls vorzugsweise mit einer Bildkombinationsvorschrift nach Fig.9 anzuwenden.

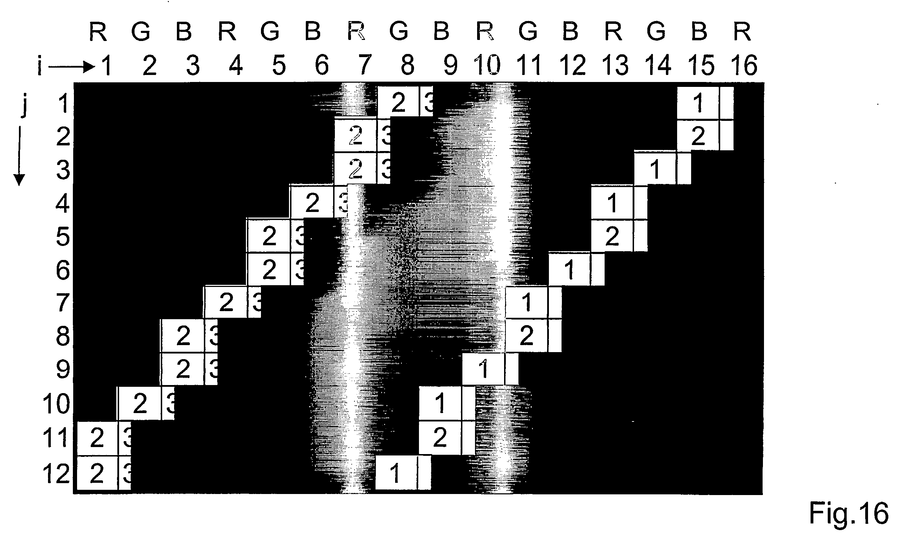

Fig.16 gibt ein Beispiel der für ein Betrachterauge sichtbaren Bildelemente bzw. Bildelementteilflächen bei Zugrundelegung der Verhältnisse nach Fig.9 und Fig.15 wieder.

Bei dem Filterarray nach Fig.15 ist im übrigen ebenso der Fall verwirklicht, daß auf mindestens einem der vorgesehenen Arrays aus Wellenlängen- bzw. Graustufenfiltern in mindestens einer Zeile q des Arrays unmittelbar benachbarte Transparentfilter an eine andere Anzahl unmittelbar benachbart positionierter Transparentfilter auf der Zeile q-1 angrenzen, als auf der Zeile q+1.

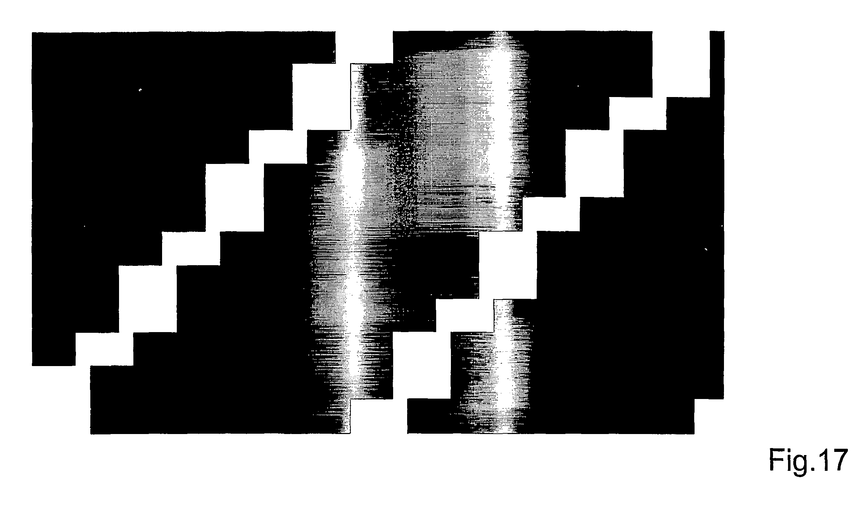

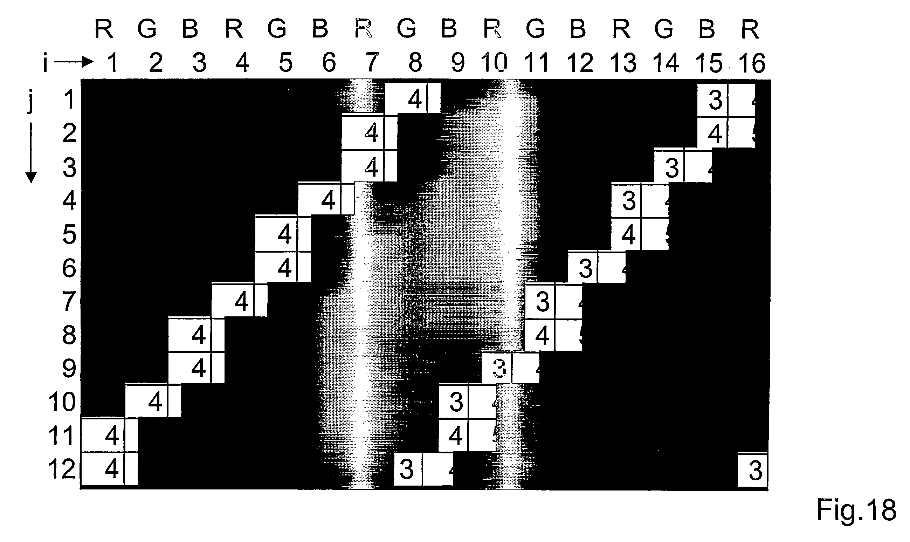

Fig.17 zeigt ein Filterarray in einer weiteren Ausgestaltung der Erfindung, vorzugsweise anzuwenden mit einer Bildkombinationsvorschrift nach Fig.9, während Fig.18 ein Beispiel für mögliche für ein Betrachterauge sichtbare Bildelemente bzw. Bildelementteilflächen bei Zugrundelegung der Verhältnisse nach Fig.9 und Fig.17 wiedergibt.

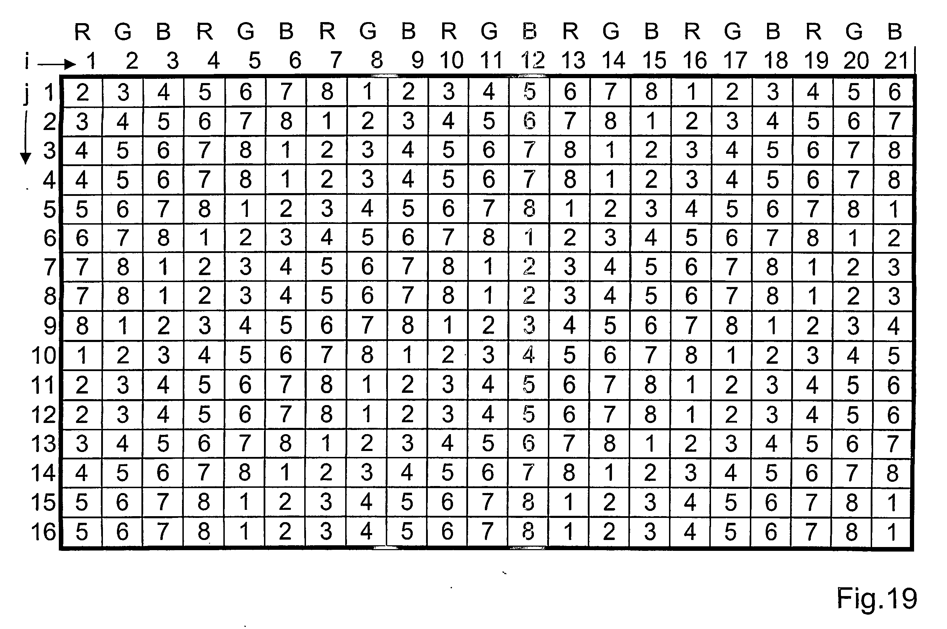

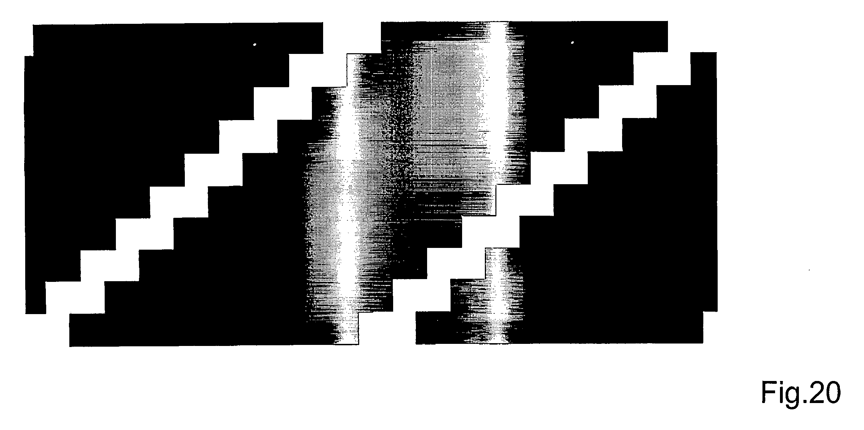

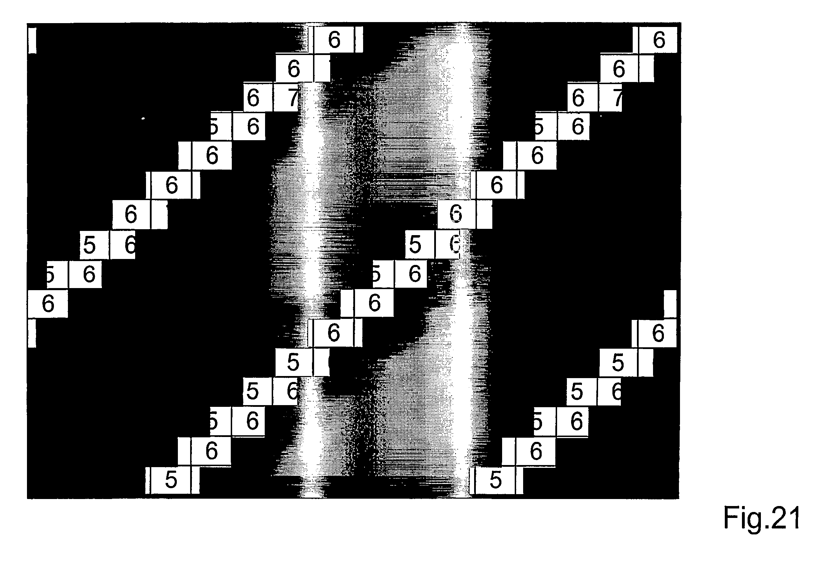

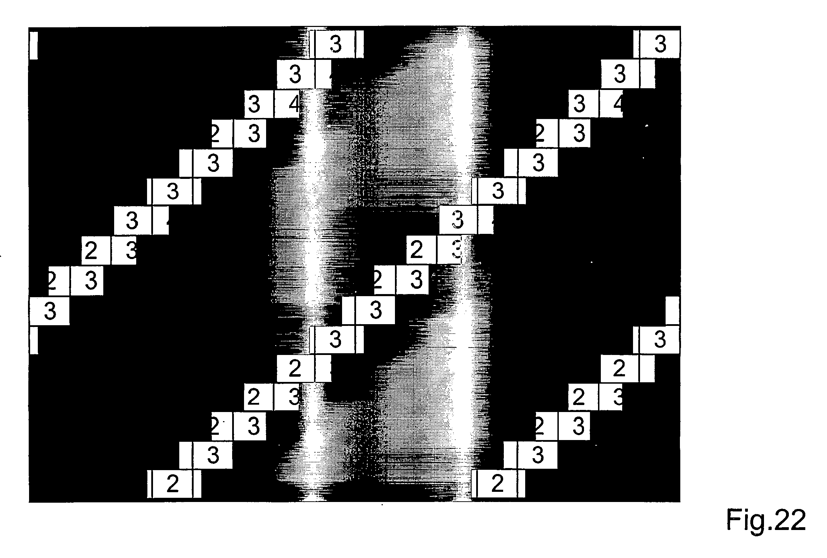

In Fig.19 ist ein weiteres Beispiel der Bildkombination und in Fig.20 ein in Verbindung mit der Bildkombinationsvorschrift nach Fig.19 für die räumliche Darstellung sehr gut geeignetes Filterarray nach der vorliegenden Erfindung zu sehen. Fig.21 und Fig.22 zeigen Beispiele für mögliche für die beiden Betrachteraugen sichtbaren Bildelemente bzw. Bildelementteilflächen bei Zugrundelegung der Verhältnisse nach Fig.19 und Fig.20. Es kommen hier acht Ansichten zur Darstellung, die jeweils auch in jeder Zeile dargestellt werden. Alternativ dazu könnten hier z.B. auch 40 Ansichten dargestellt werden, wobei pro Zeile vorzugsweise jeweils nur acht verschiedene Ansichten (z.B. 1, 6, 11, 16, 21, 26, 31, 36) verwendet werden. Die oben näher beschriebene Anzahl von pro Zeile zur Darstellung kommenden Ansichten n' wäre demnach auch hier n'=8.

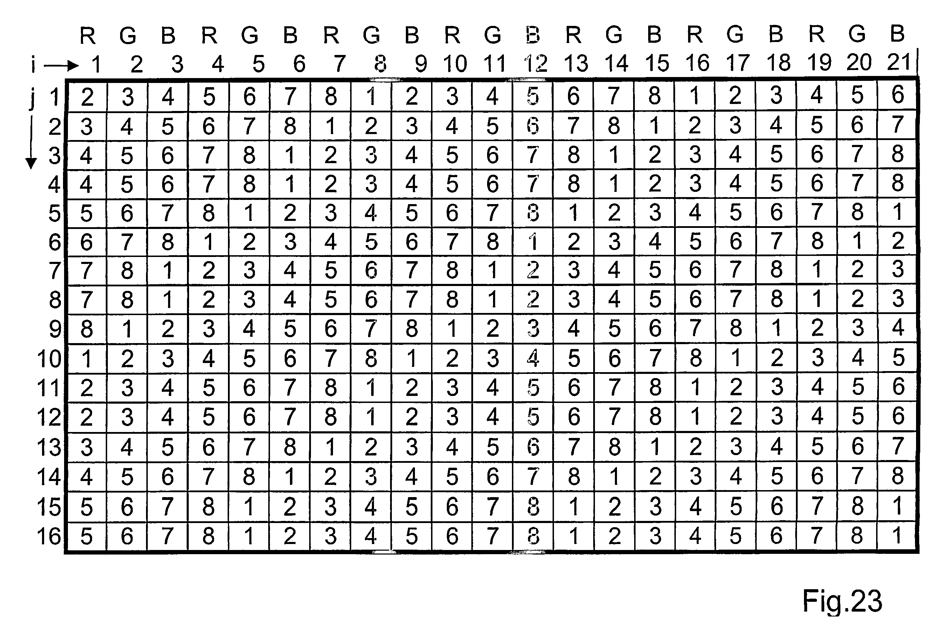

Ein weiteres Beispiel der Ausgestaltung der Erfindung ist in den Fig.23 bis Fig.26 illustriert.

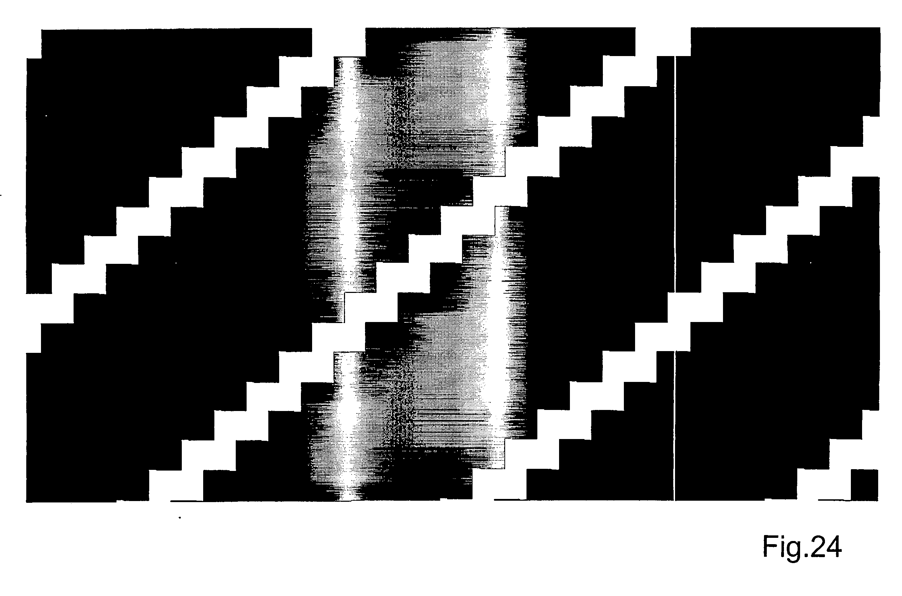

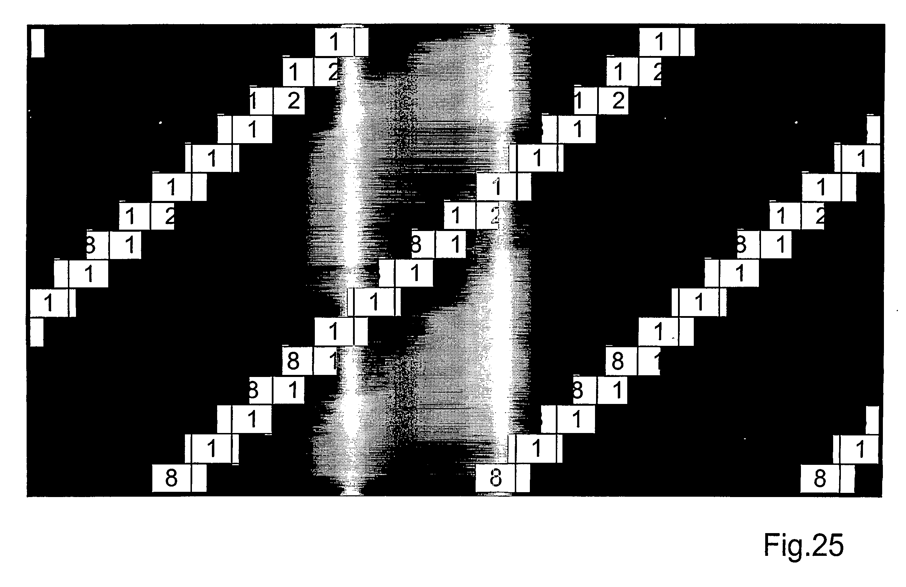

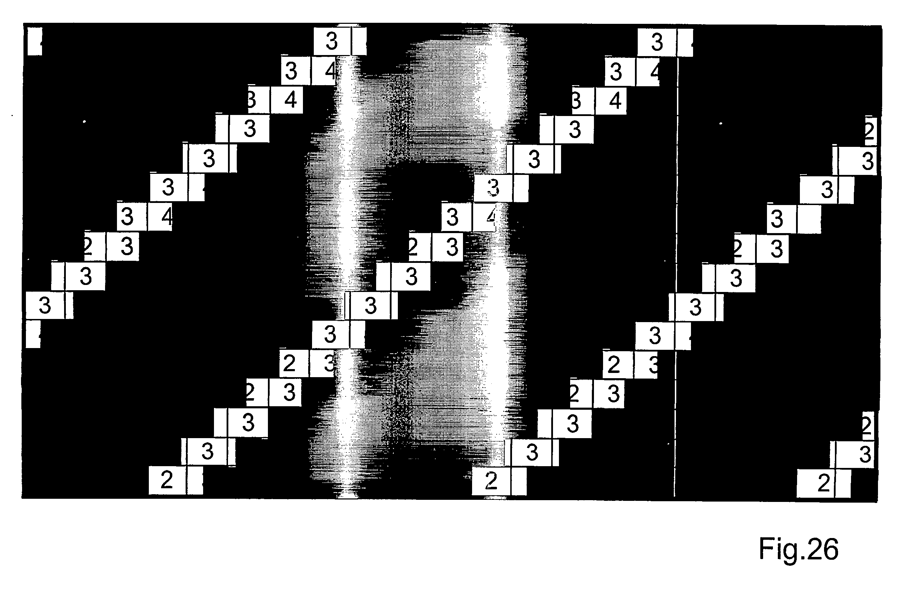

Fig.23 zeigt das weitere Beispiel der Bildkombination, Fig.24 ein in Verbindung mit der Bildkombinationsvorschrift nach Fig.23 für die räumliche Darstellung sehr gut geeignetes Filterarray und die Fig.25 und Fig.26 stellen Beispiele für mögliche für die beiden Betrachteraugen sichtbaren Bildelemente bzw. Bildelementteilflächen bei Zugrundelegung der Verhältnisse nach Fig.23 und Fig.24 dar. Auch hier werden wieder acht Ansichten zur räumlichen Darstellung verwendet.

Eine dritte Variante der erfindungsgemäßen Anordnungen, bei denen mindestens ein erster von einem Rand des Arrays zu einem gegenüberliegenden Rand reichender und ununterbrochen durchgängiger Gürtel von Transparentfiltern und mindestens ein zweiter von einem Rand des Arrays zu einem gegenüberliegenden Rand reichender und ununterbrochen durchgängiger Gürtel von Transparentfiltern vorgesehen ist, wobei die Hauptausbreitungsrichtungen dieser beiden Gürtel auf dem Array nicht-parallel zueinander ausgerichtet sind, wird in den weiteren Zeichnungen detailliert erörtert werden.

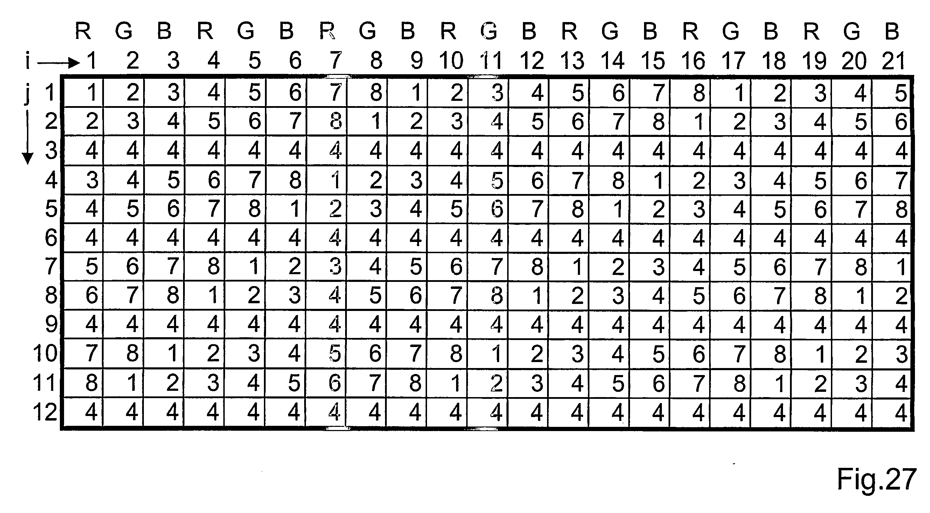

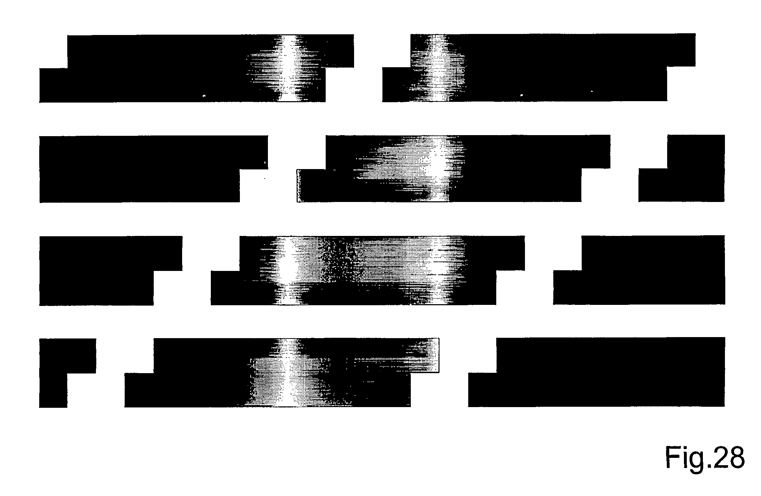

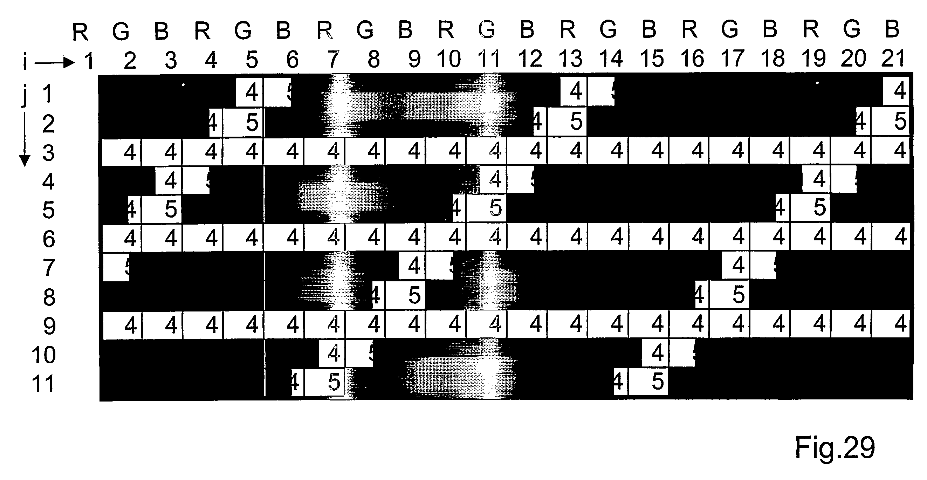

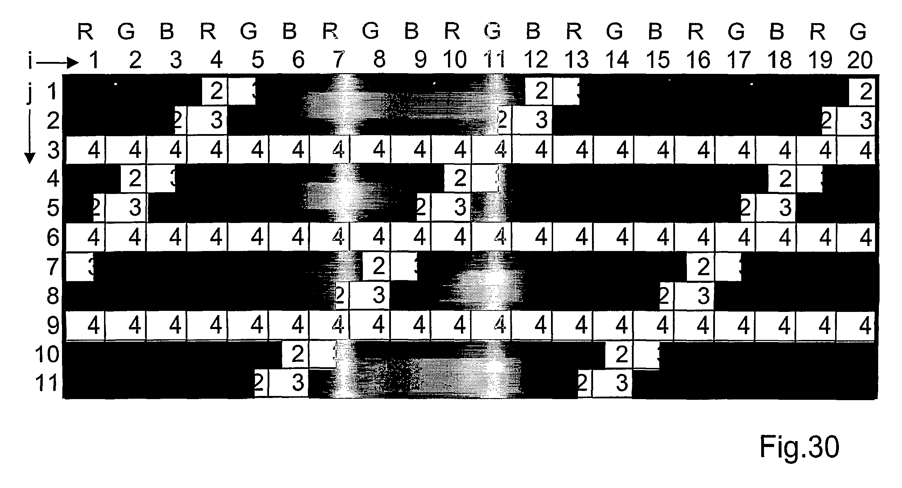

Hierzu gibt Fig. 27 ein weiteres Beispiel der Bildkombination und Fig. 28 ein dazu passendes Filterarray mit horizontalen Transparentfiltergürteln gemäß dieser Ausgestaltung der erfindungsgemäßen Anordnung wieder. Fig. 29 und Fig. 30 zeigen Beispiele für mögliche für die beiden Betrachteraugen sichtbaren Bildelemente bzw. Bildelementteilflächen bei Zugrundelegung der Verhältnisse nach Fig. 27 und Fig. 28.

Wie aus Fig. 28 ersichtlich ist, sind hier beispielhaft horizontale Gürtel von Transparentfiltern vorgesehen. Demgegenüber sind weitere (stufenförmige, schräge) Gürtel jeweils vom unteren zum oberen Rand des Filterarrays vorgesehen, so daß die Hauptausbreitungsrichtungen der horizontalen und der schrägen Gürtel nicht-parallel zueinander liegen. In praxi enthält das Filterarray viel mehr Filterelemente; hier ist der Übersichtlichkeit geschuldet lediglich ein - willkürlich ausgeschnittener - Teil des Filterarrays dargestellt. So ist vorteilhaft insbesondere eine Vielzahl solcher durchgängigen Gürtel von Transparentfiltern vorgesehen. Wie in Fig. 28 gezeigt, sind vorteilhaft einige oder alle durchgängige - horizontale - Gürtel von Transparentfiltern in periodischen Abständen zueinander auf dem Array angeordnet. Hier bildet beispielhaft jede vierte Zeile q (d.h. mit m=4) des Arrays einen derartigen durchgängigen horizontalen Gürtel von Transparentfiltern.

Wie Fig. 29 zeigt, sind in diesem Beispiel bei Parallelprojektion eines - aber nicht zwingend jedes - solchen durchgängigen - horizontalen - Gürtels von Transparentfiltern in Betrachtungsrichtung auf das Raster aus Bildelementen $\alpha_{ij}$ vorwiegend solche Bildelemente $\alpha_{ij}$ von Transparentfiltern mindestens teilweise überdeckt, die - in diesem Falle - ausschließlich Teilinformationen ein- und derselben Ansicht $A_k$ wiedergeben.

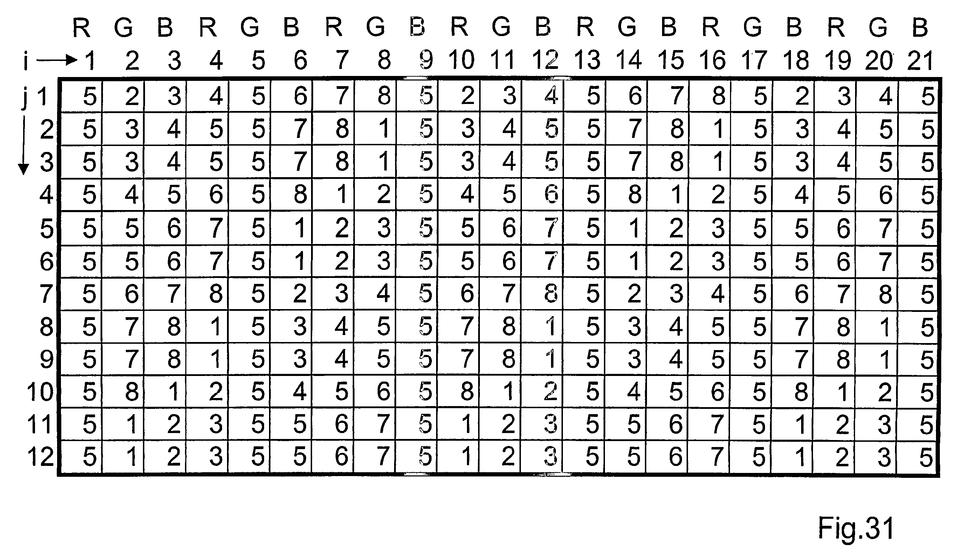

Im Rahmen der eben genannten Ausgestaltung der erfindungsgemäßen Anordnungen wird im folgenden ein weiteres Ausgestaltungsbeispiel gegeben. Es zeigt Fig. 31 das entsprechende Beispiel der Bildkombination, Fig. 32 ein dafür sehr gut geeignetes Filterarray mit unter anderem vertikalen Transparentfiltergürteln, sowie Fig. 33 und Fig. 34 Beispiele für mögliche für die beiden Betrachteraugen sichtbaren Bildelemente bzw. Bildelementteilflächen.

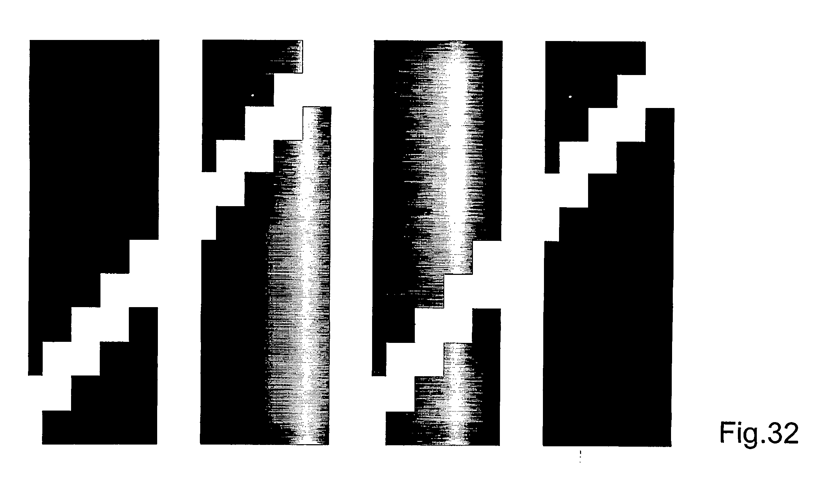

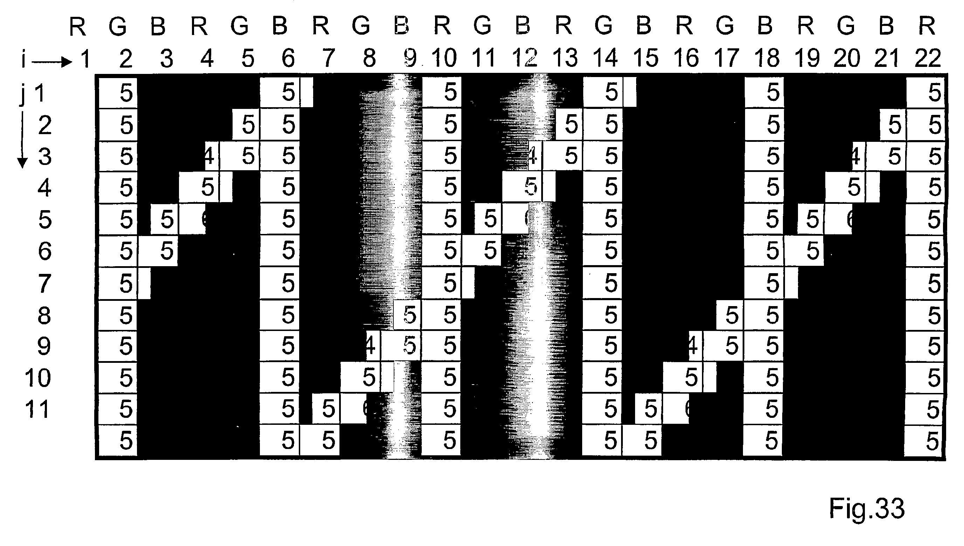

Wie in Fig. 32 zu sehen, sind hier zum eine schräge, zum anderen vertikale durchgängige Gürtel aus Transparentfiltern vorgesehen. Wie Fig. 33 zeigt, sind in diesem Beispiel bei Parallelprojektion eines - aber nicht zwingend jedes - solchen durchgängigen - vertikalen - Gürtels von Transparentfiltern in Betrachtungsrichtung auf das Raster aus Bildelementen $\alpha_{ij}$ vorwiegend solche Bildelemente $\alpha_{ij}$ von Transparentfiltern mindestens teilweise überdeckt, die - in diesem Falle - überwiegend Teilinformationen ein- und derselben Ansicht $A_k$ mit k=5 wiedergeben.

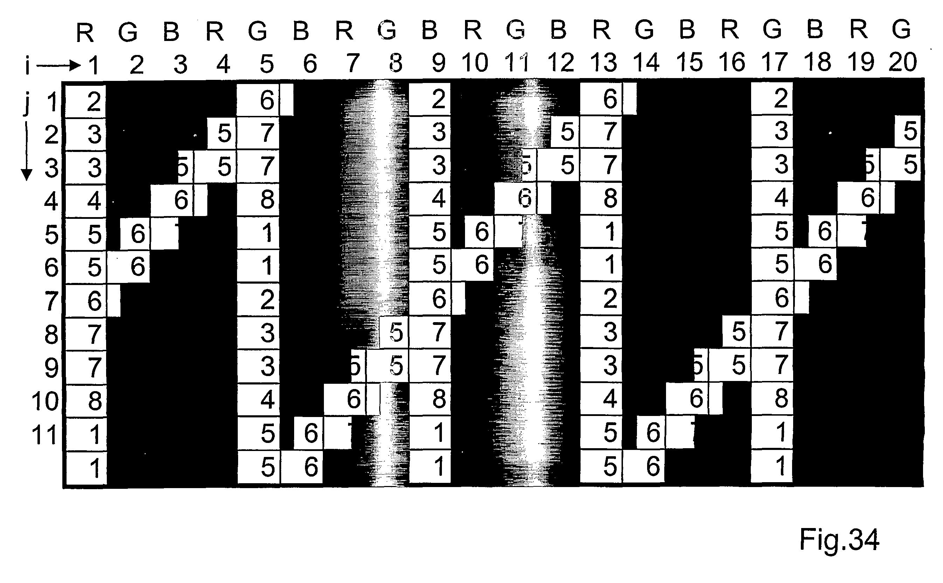

Die Fig. 34 entspräche in etwa einer leicht versetzten Schrägsicht und nicht der Parallelprojektion in Betrachtungsrichtung (welche genau genommen in Richtung parallel zur Mittelsenkrechten auf dem Raster aus Bildelementen liegen würde), sondern eher einer Parallelprojektion in schräger Richtung.

Entgegen den vorgenannten Ausführungen ist es jedoch auch denkbar, die Bildkombinationsvorschrift so zu gestalten, daß bei Parallelprojektion eines - aber nicht zwingend jedes - solchen durchgängigen Gürtels von Transparentfiltern in Betrachtungsrichtung auf das Raster aus Bildelementen $\alpha_{ij}$ mehrere solche Bildelemente $\alpha_{ij}$ von Transparentfiltern mindestens teilweise überdeckt sind, die Teilinformationen mindestens zweier verschiedener Ansichten $A_k$ wiedergeben. Dabei sind verschiedene Variationen der entsprechenden mindestens zwei Ansichten $A_k$ denkbar: Beispielsweise sind auch mehr als die geforderten zwei Ansichten verwendbar, z.B. n oder n-1 Ansichten. Auch kann die Bildkombinationsstruktur für die wie vorstehend beschrieben bei Parallelprojektion von Transparentfiltern mindestens teilweise überdeckten Bildelemente eine zufällige Struktur - und nicht wie bislang, wie z.B. in Fig. 9 vorgestellt, ein periodische Struktur - aus Bildteilinformationen mehrerer Ansichten sein. Entscheidend für die Erzielung eines 3D-Eindruckes ist, daß der jeweilige Betrachter mit seinen Augen jeweils unterschiedliche Auswahlen aus Ansichten, d.h. Ansichtengemische, sieht.

Ferner kann bei den vorgenannten Ausgestaltungen der erfindungsgemäßen Anordnungen die Breite der Transparentfiltergürtel variieren. Insbesondere bei den oben näher bezeichneten "schrägen" Gürteln kann die Breite der transparenten Filterabschnitte pro Zeile auch so gewählt werden, daß der Quotient aus der Gesamtfläche der Transparentfilter auf dem Array und der Gesamtfläche aller Filterelemente auf dem Array weniger als 1,1 /n' oder mehr als 1,8/n' beträgt.

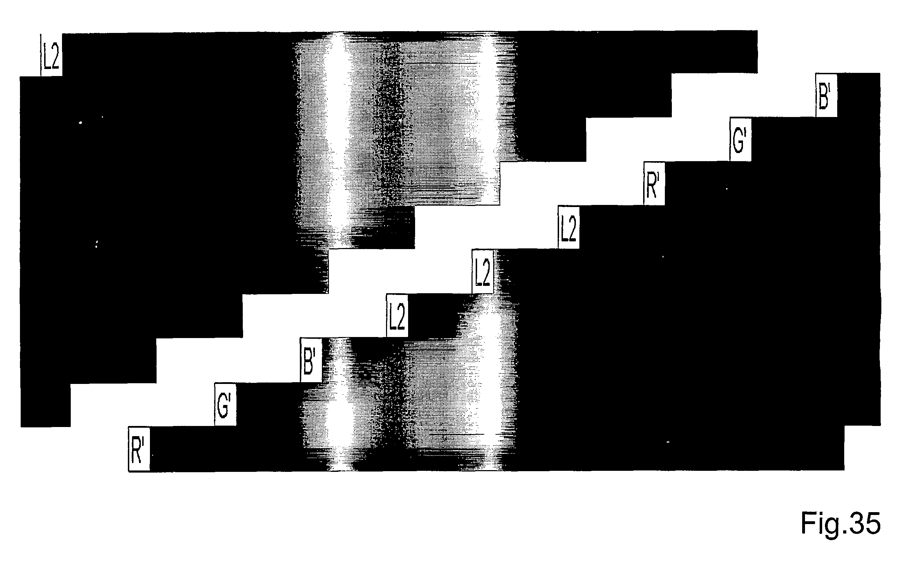

Fig. 35 zeigt ein weiteres Filterarray, welches den Anforderungen der anfangs beschriebenen Ausgestaltungen der Erfindung gerecht werden kann, ergänzt um R'-, G'-, B'-Filter und ergänzt um Graustufenfilter. Mit R' sind hier rote, mit G' grüne und mit B' blaue Wellenlängenfilter gemeint. Die jeweiligen Filterelemente bedecken nur die umrissenen Flächenanteile. Mit L2 sind Graustufenfilter gemeint, die als Neutralfilter zur 50-prozentigen wellenlängenunabhängigen Schwächung der Lichtintensität ausgebildet sind. Diese und auch die R'-, G'- bzw. B'-Filter werden nicht in Betracht gezogen, wenn wie in den erfindungsgemäß charakteristischen Merkmalen von Filterelementen die Rede ist, die für Licht des im wesentlichen gesamten sichtbaren Spektrums weitestgehend oder im wesentlichen durchlässig sind. Die R'-, G'-, B'-Filter sind nämlich nur im jeweiligen roten, grünen bzw. blauen Wellenlängenbereich lichtdurchlässig und die L2-Filter schwächen die Lichtintensität nicht unwesentlich ab, so daß auch hier nicht von "weitestgehend durchlässig" oder "im wesentlichen" gesprochen werden kann.

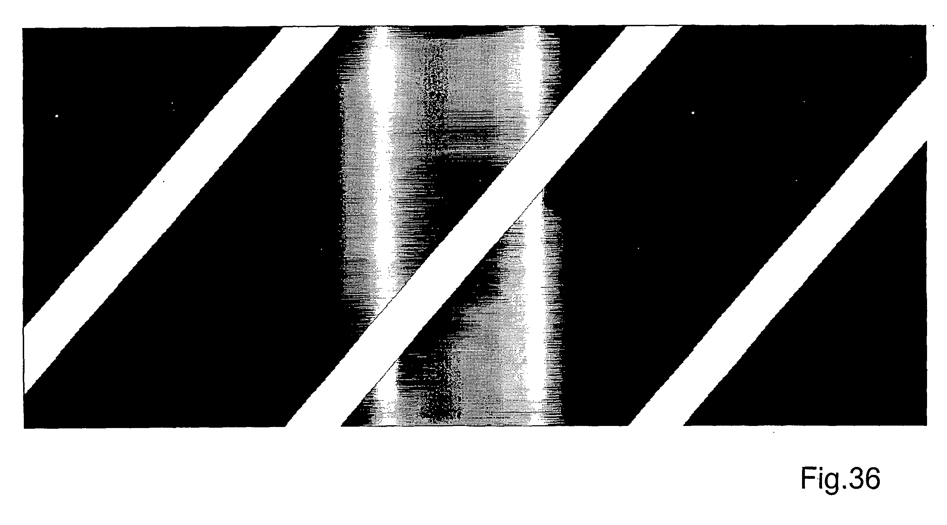

Eine weitere Ausgestaltung für ein Filterarray gemäß der anfangs beschriebenen Ausgestaltungen ist in Fig. 36 gezeigt. Während bei den oben beschriebenen Beispielen die nach vorne, zum Betrachter weisenden Flächen der

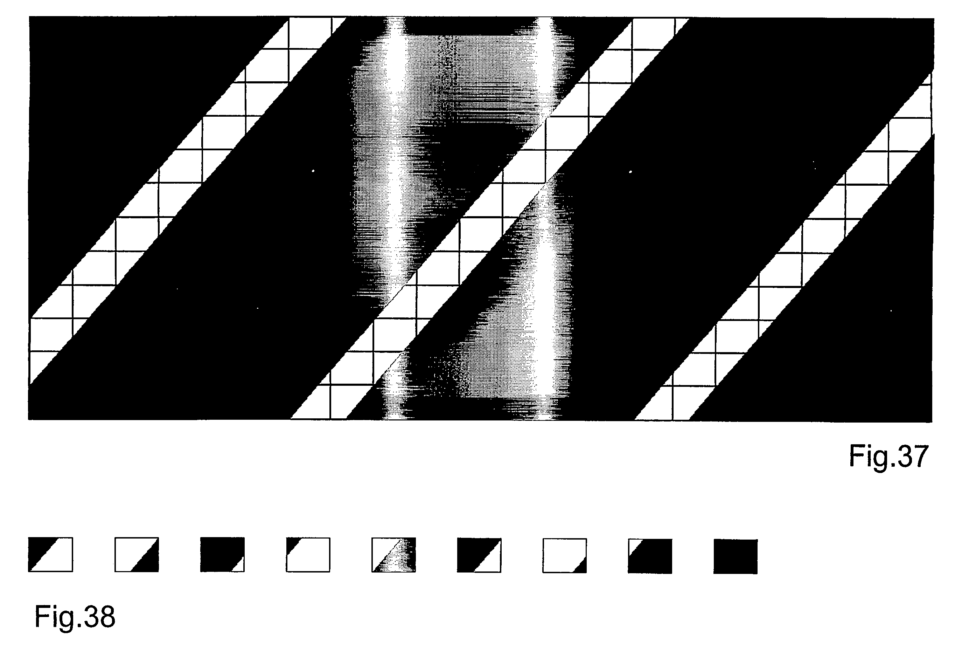

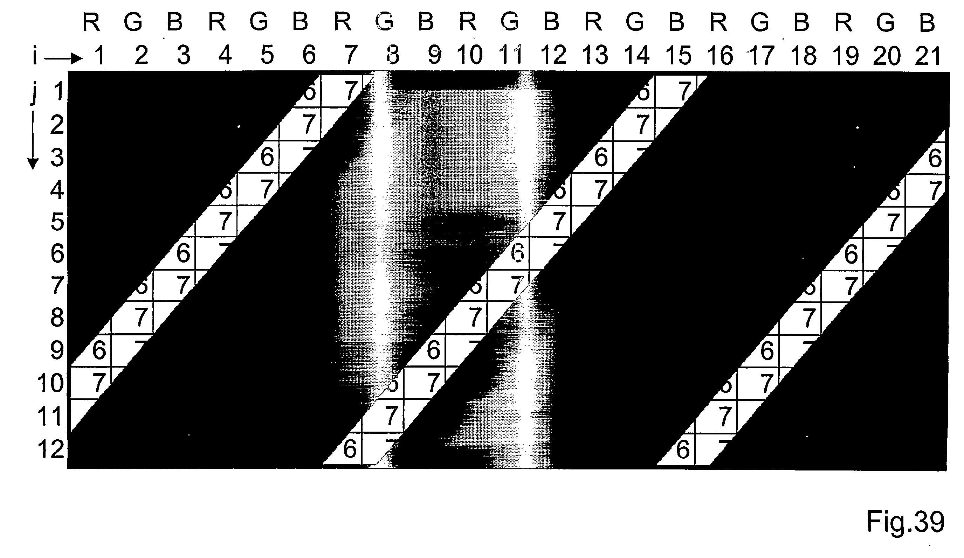

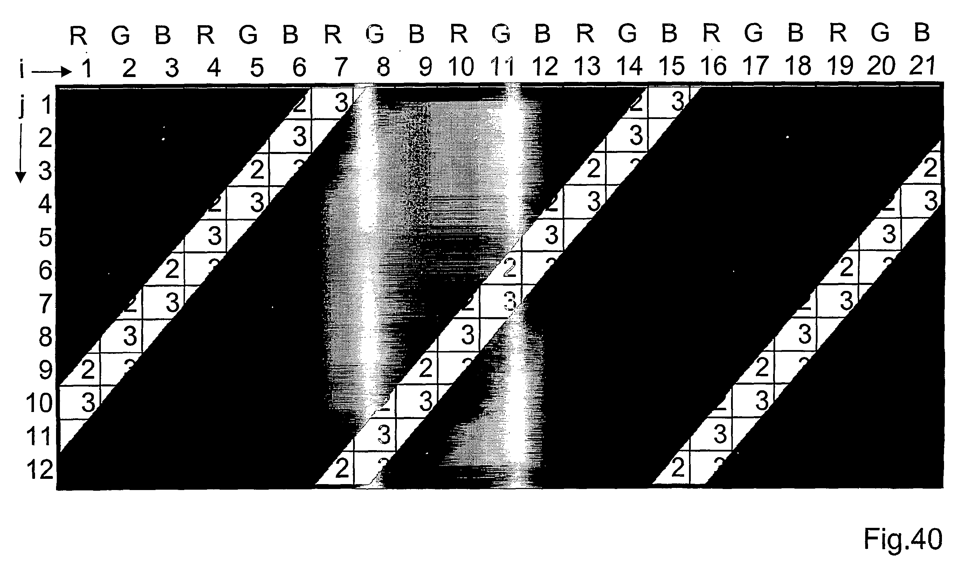

Filterelemente $\beta_{pq}$ jeweils die Form von regelmäßigen Rechtecken hatten, werden in diesem Fall viele verschiedene Formen von Filterelementen $\beta_{pq}$ verwendet, so daß die schräg verlaufenden Streifen, die beispielsweise mit Transparentfiltern belegt sind, im wesentlichen glatte Kanten bekommen. Dies kann mit Hilfe der Figuren 37 und 38 verdeutlicht werden. Fig. 37 zeigt als Gitterstruktur das Array, auf dem die Filterelemente $\beta_{pq}$ angeordnet sind. Die einzelnen, verwendeten Filterelemente sind in Fig. 38 nebeneinander dargestellt. Die Zuordnung bzw. Kombination zu einem Maskenbild läßt sich analog mit der oben beschriebenen Formel für b bestimmen, wobei man jetzt allerdings mit jedem Wert von b eine der in Fig. 38 gezeigten Formen verbindet. In Fig. 39 und Fig. 40 sind Beispiele für jeweils das linke bzw. rechte Betrachterauge 3 gezeigt, d.h. welche Bildelemente mit welchen Ansichten diese von einer vorgegebenen Position des Betrachters aus sehen. Darüberhinaus ist es auch möglich, die Streifen nicht schräg, sondern senkrecht anzuordnen. Auch in diesem sowie dem folgenden Beispiel liegt der Quotient aus der Summe der Flächenanteile von Filterelementen $\beta_{pq}$, die für Licht des im wesentlichen gesamten sichtbaren Spektrums weitestgehend durchlässig sind, und der Summe der Flächenanteile aller Filterelemente $\beta_{pq}$ zwischen 1,1 und 1,8.

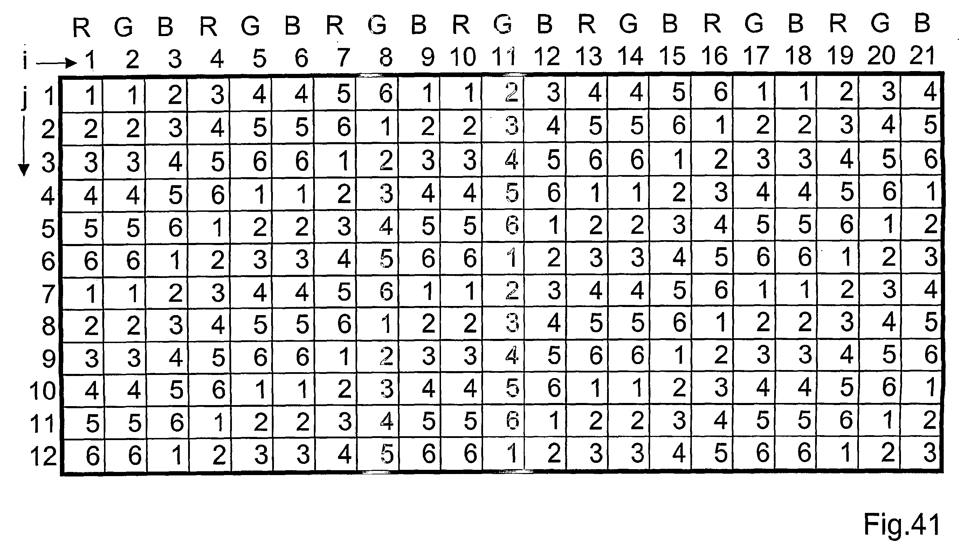

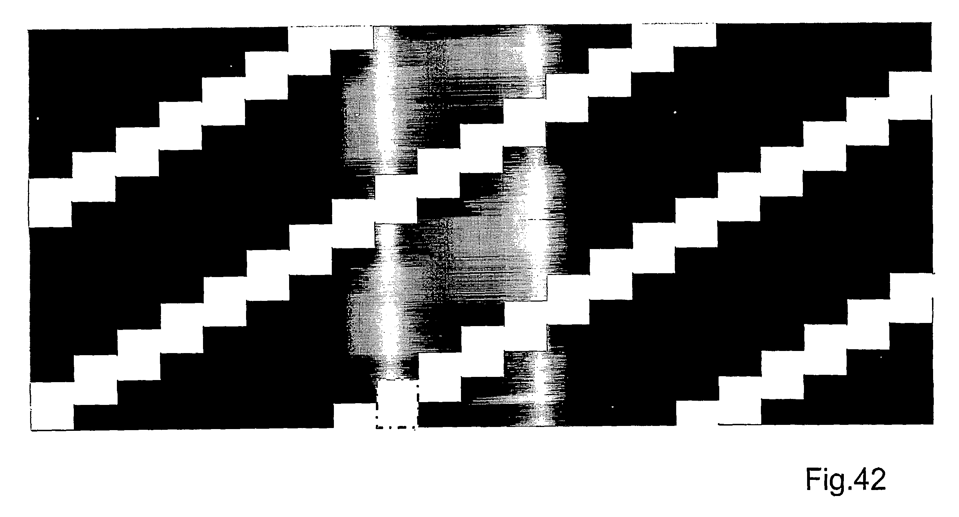

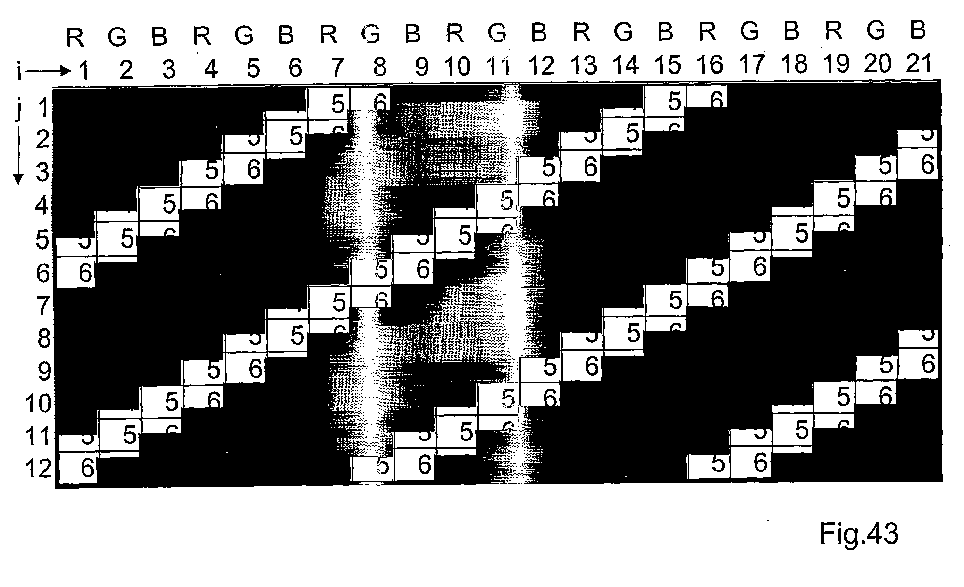

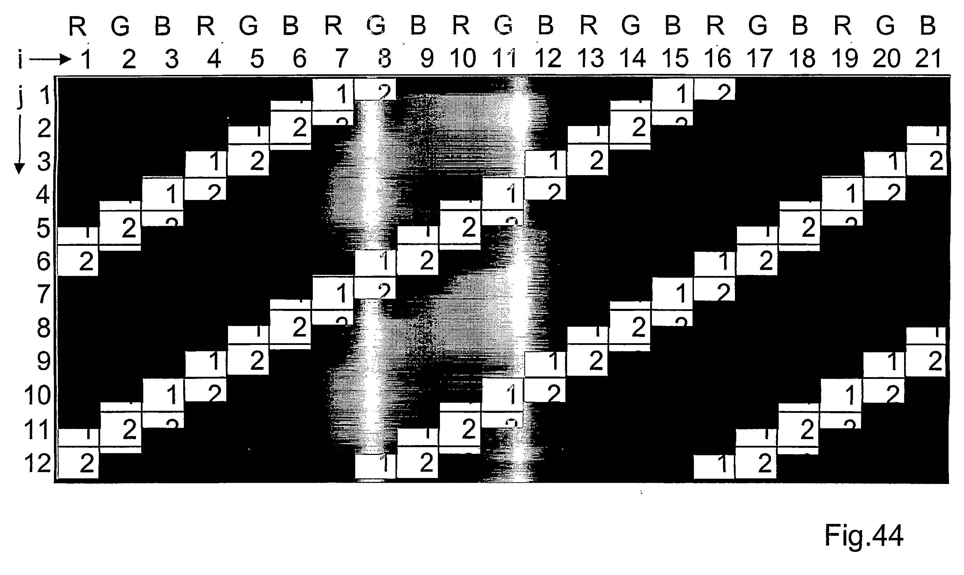

Ein abschließendes Beispiel in Anlehnung an die eingangs genannten Ausführungsbeispiele wird in den Fig. 41-44 beschrieben. In Fig. 41 ist eine Bildkombination mit sechs Ansichten (n'=6) gezeigt; allerdings sind auch Kombinationen mit mehr oder weniger Ansichten möglich. Fig. 42 zeigt ein in Verbindung mit der Bildkombinationsvorschrift nach Fig. 41 für die räumliche Darstellung sehr gut geeignetes Filterarray, Fig. 43 und Fig. 44 zeigen beispielhaft, welche Bildelemente mit welchen Ansichten mit dem linken bzw. rechten Betrachterauge 3 von einer vorgegebenen Position des Betrachters aus sehen.

In Fig. 42 sind gestrichelt die Abmessungen eines Transparentfilters eingezeichnet. Seine Breite entspricht etwa der eines Bildelements $\alpha_{ij}$ und beträgt beispielsweise 99,86% davon. Es ist außerdem etwa 1.5 mal so hoch; beispielsweise beträgt die Höhe 149,8% der Höhe eines Bildelements $\alpha_{ij}$. Diese Verhältnisse treten beispielsweise bei einigen 18.1-Zoll-LC-Displays auf: Dort beträgt die mittlere Breite der Bildelemente 0,28047 mm und die mittlere Höhe 0,09349 mm. Ein Transparentfilterelement ist dann etwa 0,420146 mm hoch und 0,093366 mm breit.

Werden die einzelnen Transparentfilter im Filterarray nur halb so hoch ausgeführt, wie sie in Fig. 42 dargestellt sind, so läßt sich auch die Strukturierung über die Gleichung zur Bestimmung des Maskenbilds gemäß obiger Gleichung erreichen.

Die Erfindung bietet gegenüber dem Stand der Technik den Vorteil der Bildhelligkeitserhöhung bei der 3D-Darstellung. Damit einhergehend wird eine verbesserte Textlesbarkeit auf den erfindungsgemäßen Anordnungen gewährleistet.

**Patentansprüche**

1.  Anordnung zur räumlichen Darstellung einer Szene/ eines Gegenstandes, umfassend

      - einen Bildgeber mit einer Vielzahl einzelner Bildelemente ($\alpha_{ij}$) in einem Raster aus Zeilen(j) und Spalten (i), wobei auf den Bildelementen ($\alpha_{ij}$) Teilinformationen aus mindestens drei Ansichten(Ak) (k=1... n, n$\geq$3) der Szene/ des Gegenstandes wiedergegeben werden,
      - ein oder mehrere Arrays aus einer Vielzahl einzelner, in Zeilen (q) und Spalten (p) angeordneter, als Filterelemente ($\beta_{pq}$) ausgeführte Wellenlängen- und/oder Graustufenfilter, von denen ein Teil als für das gesamte sichtbare Spektrum lichtdurchlässige Transparentfilter ausgestaltet ist, und der übrige Teil lichtundurchlässig ist und die dem Bildgeber mit den Bildelementen ($\alpha_{ij}$) in Blickrichtung vor- und/oder nachgeordnet sind, so dass für das von den Bildelementen ($\alpha_{ij}$) abgestrahlte Licht Ausbreitungsrichtungen vorgegeben werden, wobei jeweils ein Bildelement ($\alpha_{ij}$) mit mehreren zugeordneten Filterelementen ($\beta_{pq}$) oder ein Filterelement ($\beta_{pq}$) mit mehreren zugeordneten Bildelementen derart korrespondiert, dass jeweils die verbindungsgerade zwischen der Flächenmitte eines sichtbaren Abschnittes des Bildelementes ($\alpha_{ij}$) und der Flächenmitte eines sichtbaren Abschnittes des Filterelements ($\beta_{pq}$) einer Ausbreitungsrichtung entspricht, wobei sich die Ausbreitungsrichtungen innerhalb eines Betrachtungsraumes, in dem sich der/ die Betrachter aufhalten, in einer Vielzahl von Schnittpunkten, die jeweils einer Betrachtungsposition entsprechen, kreuzen, wodurch von jeder Betrachtungsposition aus ein Betrachter mit einem Auge überwiegend Teilinformationen einer ersten Auswahl und mit dem anderen Auge überwiegend Teilinformationen einer zweiten Auswahl aus den Ansichten (Ak) (k=1, ... n) optisch wahrnimmt, **dadurch gekennzeichnet, dass**
      - auf mindestens einem der Arrays das Verhältnis der Flächenanteile der für das gesamte sichtbare Spektrum lichtdurchlässigen Filterelemente ($\beta_{pq}$) zur Gesamtfläche aller Filterelemente multipliziert mit der durchschnittlichen Anzahl (n') von den verschiedenen, pro Zeile (j) des Rasters aus Bildelementen ($\alpha_{ij}$) dargestellten Ansichten, größer als 1 und höchstens 2 ist.

2.  Anordnung nach Anspruch 1, **dadurch gekennzeichnet, daß** der Quotient aus der Summe der Flächenanteile von

Filterelementen ($\beta_{pq}$), die für Licht des im wesentlichen gesamten sichtbaren Spektrums weitestgehend durchlässig sind, und der Summe der Flächenanteile aller Filterelemente ($\beta_{pq}$) des jeweiligen Arrays einen Wert annimmt, der zwischen dem Quotienten Q1=1,1/n' und dem Quotienten Q2=1,8/n' liegt, so daß auf Grund der für das komplette sichtbare Spektrum lichttransmittierenden Filterelemente ($\beta_{pq}$) im Mittel pro sichtbarem Rasterabschnitt im Bezug auf die Bildelementfläche stets etwa 1,1 bis 1,8 Bildelemente ($\alpha_{ij}$) sichtbar sind.

**3.** Anordnung nach Anspruch 1, **dadurch gekennzeichnet, daß** bei Parallelprojektion eines genügend großen Filterabschnittes mindestens eines vorgesehenen Arrays aus Filterelementen ($\beta_{pq}$) auf mindestens eine Zeile (j) oder auf mindestens eine Spalte (i) des Rasters mindestens die 1,1/n'-fache und höchstens jedoch die 1,8/n'-fache Fläche der entsprechenden Zeile (j) bzw. Spalte (i) von für das komplette sichtbare Spektrum im wesentlichen lichtdurchlässigen Filterelementen ($\beta_{pq}$) bedeckt ist, so daß auf Grund der für das komplette sichtbare Spektrum lichttransmittierenden Filterelemente ($\beta_{pq}$) im Mittel pro sichtbarem Rasterabschnitt im Bezug auf die Bildelementfläche stets etwa 1,1 bis 1,8 Bildelemente ($\alpha_{ij}$) sichtbar sind.

**4.** Anordnung nach Anspruch 1, **dadurch gekennzeichnet, daß** mindestens ein erster von einem Rand des Arrays zu einem gegenüberliegenden Rand reichender und ununterbrochen durchgängiger Gürtel von Transparentfiltern und mindestens ein zweiter von einem Rand des Arrays zu einem gegenüberliegenden Rand reichender und ununterbrochen durchgängiger Gürtel von Transparentfiltern vorgesehen ist, wobei die Hauptausbreitungsrichtungen dieser beiden Gürtel auf dem Array nicht-parallel zueinander ausgerichtet sind.

**5.** Anordnung nach Anspruch 4, **dadurch gekennzeichnet, daß** mindestens einer der vorgesehenen durchgängigen Gürtel von Transparentfiltern parallel zum oberen, unteren, linken oder rechten Rand des jeweiligen Arrays aus Wellenlängen- bzw. Graustufenfiltern und/oder parallel zum oberen, unteren, linken oder rechten Rand des Rasters aus Bildelementen ($\alpha_{ij}$) verläuft.

**6.** Anordnung nach Anspruch 4 oder 5, **dadurch gekennzeichnet, daß** eine Vielzahl solcher durchgängigen Gürtel von Transparentfiltern vorgesehen ist.

**7.** Anordnung nach einem der Ansprüche 4-6, **dadurch gekennzeichnet, daß** mindestens ein Teil der durchgängigen Gürtel von Transparentfiltern zufällig über das Array verteilt angeordnet ist, insofern besagte Gürtel parallel zueinander liegen.

**8.** Anordnung nach einem der Ansprüche 4-6, **dadurch gekennzeichnet, daß** mindestens ein Teil der durchgängigen Gürtel von Transparentfiltern in periodischen Abständen zueinander auf dem Array angeordnet ist, insofern besagte Gürtel parallel zueinander liegen, wobei bevorzugt jede m-te Zeile (q) (mit m>1) des entsprechenden Arrays einen derartigen durchgängigen Gürtel von Transparentfiltern bildet.

**9.** Anordnung nach einem der Ansprüche 4-8, **dadurch gekennzeichnet, daß** bei Parallelprojektion eines - aber nicht zwingend jedes - solchen durchgängigen Gürtels von Transparentfiltern in Betrachtungsrichtung auf das Raster aus Bildelementen ($\alpha_{ij}$) vorwiegend solche Bildelemente ($\alpha_{ij}$) von Transparentfiltern mindestens teilweise überdeckt sind, die zu einem überwiegenden Anteil oder ausschließlich Teilinformationen ein- und derselben Ansicht ($A_k$) wiedergeben.

**10.** Anordnung nach einem der Ansprüche 4-8, **dadurch gekennzeichnet, daß** bei Parallelprojektion eines - aber nicht zwingend jedes - solchen durchgängigen Gürtels von Transparentfiltern in Betrachtungsrichtung auf das Raster aus Bildelementen ($\alpha_{ij}$) mehrere solche Bildelemente ($\alpha_{ij}$) von Transparentfiltern mindestens teilweise überdeckt sind, die Teilinformationen mindestens zweier verschiedener Ansichten ($A_k$) wiedergeben.

**11.** Anordnung nach einem der vorgenannten Ansprüche, **dadurch gekennzeichnet, daß** die Zuordnung von Teilinformationen aus den Ansichten ($A_k$) (k=1...n) zu Bildelementen ($\alpha_{ij}$) der Position (i,j) nach der Funktion vorgenommen wird

$$k = i - c_{ij} \cdot j - n \cdot IntegerPart\left[\frac{i - c_{ij} \cdot j - 1}{n}\right],$$

mit

- (i) dem Index eines Bildelementes ($\alpha_{ij}$) in einer Zeile des Rasters,
- (j) dem Index eines Bildelementes ($\alpha_{ij}$) in einer Spalte des Rasters,
- (k) der fortlaufenden Nummer der Ansicht ($A_k$) (k=1...n), aus der die Teilinformation stammt, die auf einem bestimmten Bildelement ($\alpha_{ij}$) wiedergegeben werden soll,
- (n) der Gesamtzahl der jeweils verwendeten Ansichten ($A_k$) (k=1...n),
- ($c_{ij}$) einer wählbaren Koeffizientenmatrix zur Kombination bzw. Mischung der verschiedenen von den Ansichten ($A_k$) (k=1...n) stammenden Teilinformationen auf dem Raster und
- IntegerPart einer Funktion zur Erzeugung der größten ganzen Zahl, die das in eckige Klammern gesetzte Argument nicht übersteigt.

**12.** Anordnung nach einem der vorgenannten Ansprüche, **dadurch gekennzeichnet, daß** für vorgesehene Filterarrays die Filterelemente ($\beta_{pq}$) in Abhängigkeit von ihrer Transparenzwellenlänge / ihrem Transparenzwellenlängenbereich / ihrem Transmissionsgrad ($\lambda_b$) nach folgender Funktion zu einem Maskenbild kombiniert werden

$$b = p - d_{pq} \cdot q - n_m \cdot IntegerPart\left[\frac{p - d_{pq} \cdot q - 1}{n_m}\right],$$

mit

- (p) dem Index eines Filterelements ($\beta_{pq}$) in einer Zeile des jeweiligen Arrays,
- (q) dem Index eines Filterelements ($\beta_{pq}$) in einer Spalte des jeweiligen Arrays,
- (b) einer ganzen Zahl, die für ein Wellenlängen- bzw. Graustufenfilter ($\beta_{pq}$) an der Position (p,q) eine der vorgesehenen Transparenzwellenlängen/wellenlängenbereiche bzw. Transmissionsgrade ($\lambda_b$) festlegt und Werte zwischen 1 und ($b_{max}$), mit einer natürlichen Zahl $b_{max} > 1$, haben kann,
- ($n_m$) einem ganzzahligen Wert größer "Null", der bevorzugt der Gesamtzahl (k) in dem Kombinationsbild dargestellten Ansichten ($A_k$) entspricht,
- ($d_{pq}$) einer wählbaren Maskenkoeffizientenmatrix zur Variation der Erzeugung eines Maskenbildes und
- IntegerPart einer Funktion zur Erzeugung der größten ganzen Zahl, die das in eckige Klammern gesetzte Argument nicht übersteigt.

**13.** Anordnung nach einem der vorgenannten Ansprüche, **dadurch gekennzeichnet, daß** genau ein Array aus Filterelementen ($\beta_{pq}$) vorgesehen ist und der Abstand (z) zwischen dem besagtem Array und dem Raster aus Bildelementen ($\alpha_{ij}$), in Normalenrichtung gemessen, nach folgender Gleichung festgelegt wird:

$$\frac{p_d}{s_p} = \frac{d_a \pm z}{z},$$

worin bedeuten

- ($s_p$) den mittleren horizontalen Abstand zwischen zwei benachbarten Bildelementen ($\alpha_{ij}$),
- ($p_d$) die mittlere Pupillendistanz bei einem Betrachter und
- $d_a$ einen wählbaren Betrachtungsabstand.

**14.** Anordnung nach einem der vorgenannten Ansprüche, **dadurch gekennzeichnet, daß** alle auf dem bzw. den Filterarrays vorgesehenen Filterelemente gleich groß sind.

**15.** Anordnung nach einem der vorgenannten Ansprüche, **dadurch gekennzeichnet, daß** die auf dem bzw. den Filterarrays vorgesehenen Filterelemente jeweils eine im wesentlichen periodische Anordnung aufweisen.

**16.** Anordnung nach einem der vorgenannten Ansprüche, **dadurch gekennzeichnet, daß** die Lichtausbreitungsrichtungen für die jeweils auf den Bildelementen ($\alpha_{ij}$) wiedergegebene Teilinformation in Abhängigkeit ihrer Wellenlänge/ ihres Wellenlängenbereichs der vorgegeben sind.

**17.** Anordnung nach einem der vorgenannten Ansprüche, **dadurch gekennzeichnet, daß** auf mindestens einem der vorgesehenen Arrays aus Filterelementen ($\beta_{pq}$) in mindestens einer Zeile (q) des Arrays unmittelbar benachbarte Transparentfilter an eine andere Anzahl unmittelbar benachbart positionierter Transparentfilter auf der Zeile (q-1) angrenzen, als auf der Zeile (q+1).

**18.** Anordnung nach einem der vorgenannten Ansprüche, **dadurch gekennzeichnet, daß** jedes der vorgesehenen Filterarrays als statisches, zeitlich unveränderliches Filterarray ausgebildet und im wesentlichen in einer fixen Relativposition zum Raster aus Bildelementen ($\alpha_{ij}$), das heißt dem Bildgeber, angeordnet ist.

**19.** Anordnung nach einem der vorgenannten Ansprüche, **dadurch gekennzeichnet, daß** mindestens ein Bildelement ($\alpha_{ij}$) eine aus Teilinformationen mindestens zweier verschiedener Ansichten ($A_k$) gemischte Bildinformation wiedergibt.

**20.** Anordnung nach einem der vorgenannten Ansprüche, **dadurch gekennzeichnet, daß** der Bildgeber ein LC-Display, ein Plasmadisplay oder ein OLED-Bildschirm ist.

**21.** Anordnung nach einem der vorgenannten Ansprüche, wobei eine transluzente Bildwiedergabeeinrichtung, beispielsweise ein LC-Display, sowie genau ein Array aus Filterelementen ($\beta_{pq}$) vorgesehen ist, welches sich in Betrachtungsrichtung zwischen der Bildwiedergabeeinrichtung und einer Planbeleuchtungseinrichtung befindet, und wobei fernerhin eine schaltbare Streuscheibe zwischen der Bildwiedergabeeinrichtung und dem Filterarray vorgesehen ist, so daß in einer ersten Betriebsart, in welcher die schaltbare Streuscheibe transparent geschaltet ist, für den/die Betrachter ein räumlicher Eindruck erzeugt wird, während in einer zweiten Betriebsart, in welcher die schaltbare Streuscheibe mindestens teilweise streuend geschaltet ist, die Wirkung des Arrays aus Filterelementen ($\beta_{pq}$) weitestgehend aufgehoben ist, so daß das gestreute Licht eine weitestgehend homogene Beleuchtung der Bildwiedergabeeinrichtung ermöglicht und auf dieser zweidimensionale Bildinhalte in voller Auflösung wahrnehmbar dargestellt werden können.

**22.** Anordnung nach einem der Ansprüche 1 bis 20, wobei mindestens ein Array aus Filterelementen ($\beta_{pq}$) vorgesehen ist, welches mindestens teilweise als Wellenlängen- bzw. Graustufenfilter wirkende Pixel mit einem elektrochromen oder photochromen Aufbau beinhaltet, wobei das Array in einer ersten Betriebsart für die 3D-Darstellung insbesondere auch unter Verwendung der elektrochrom bzw. photochrom aufgebauten Pixel eine zur räumlichen Darstellung geeignete Filterarraystruktur exhibiert, während in einer zweiten Betriebsart die elektrochrom bzw. photochrom aufgebauten Pixel so transparent wie möglich, bevorzugt für das komplette sichtbar Spektrum im wesentlichen vollständig transparent, geschaltet werden.

**23.** Anordnung nach Anspruch 22, **dadurch gekennzeichnet, daß** sowohl elektrochrom bzw. photochrom aufgebaute als auch in ihren Transmissionseigenschaften unveränderliche Wellenlängen- bzw. Graustufenfilter vorgesehen sind, wobei besagte in ihren Transmissionseigenschaften unveränderliche Filter bevorzugt für das komplette sichtbar Spektrum im wesentlichen vollständig transparent ausgebildet sind.

**Claims**

**1.** An arrangement for the three dimensional display of a scenery or an object comprising

- An image generator comprising a plurality of image elements ($\alpha_{ij}$) arranged within a grid formed by rows (j) and columns (i), wherein partial information from at least three views ($A_k$) (*k=1...n, n $\geq$ 3*) of the scenery or the object is represented on the image elements ($\alpha_{ij}$),
- one or more arrays of a plurality of single filter elements ($\beta_{pq}$) which are arranged in rows (q) and columns (p), wherein the filter elements ($\beta_{pq}$) are implemented as wavelength and/ or grey level filters, a portion of which is implemented as translucent filters with respect to the whole visible spectrum, whereas the remaining portion ($\beta_{pq}$) is non-translucent and is arranged; with respect to a direction of view; in front and / or behind the image generator comprising image elements ($\alpha_{ij}$), such that directions of propagation are defined for the light emitted by the plurality of image elements ($\alpha_{ij}$), wherein one image element ($\alpha_{ij}$) corresponds to more than one filter elements ($\beta_{pq}$) or one filter element corresponds to more than one of the image elements, respectively, the correspondence being such that a straight line between the centre of a visible portion of the image elements ($\alpha_{ij}$) and the centre of a visible portion of the filter element ($\beta_{pq}$), each, corresponds to a direction of propagation, wherein the directions of propagation intersect at a plurality of intersecting points within a viewing room in which the one or more viewers are located, each of the intersecting points corresponding to a viewing position, such that a viewer optically perceives, from each viewing position, with one eye mainly partial information from a first selection and with the second eye mainly partial information from a second selection out of the views ($A_k$) *(k=1...n, n ≥3),*

**characterized in that**

- on at least one of the arrays the ratio of the area portions of the filter elements being translucent over the whole visible spectrum to the total area of all filter elements multiplied by the average number(n') of different views displayed per line (j) of the grid formed by image elements ($\alpha_{ij}$) is greater than 1 and not more than 2.

2. The arrangement according to claim 1, **characterized in that** the ratio of the sum of the area portions of filter elements ($\beta_{pq}$) which are substantially translucent over the whole visible spectrum, to the sum of all area portions of filter elements ($\beta_{pq}$) of the respective array has a value in the range between ratio Q1=1.1/n' and ratio Q2=1.8/n', such that on average always about 1.1 to 1.8 image elements ($\alpha_{ij}$) are visible per visible grid portion with respect to the image element area, due to the filter elements ($\beta_{pq}$) which are translucent over the whole visible spectrum.

3. The arrangement according to claim 1, **characterized in that**, for a parallel projection of a sufficiently large filter portion of at least one provided array formed by filter elements ($\beta_{pq}$) onto at least a row (j) or onto at least a column (i) of the grid, at least the 1.1/n'-fold but not more than the 1. 8/n'-fold surface of the corresponding row (j), respectively the corresponding column (i) is covered by the filter elements ($\beta_{pq}$) substantially being transparent over the whole visible spectrum; such that on average always about 1.1 to 1.8 image elements ($\alpha_{ij}$) are visible per visible grid portion with respect to the image element area, due to the filter elements ($\beta_{pq}$) which are translucent over the whole visible spectrum.

4. The arrangement according to claim 1, **characterized in that** at least a first uninterrupted continuous belt of transparent filters that reaches from one edge of the array to the opposite edge, and at least a second uninterrupted continuous belt of transparent filters that reaches from one edge of the array to an opposite edge of the array is provided, wherein the main directions of extension of the two belts on the array are not arranged parallel to each other.

5. The arrangement according to claim 4, **characterized in that** at least one of the provided continuous belts of transparent filters is arranged parallel to the upper, lower, left or right edge of the respective array formed of wavelength or grey level filters and/or parallel to the upper, lower, left or right edge of the grid of image elements ($\alpha_{ij}$).

6. The arrangement according to claim 4 or 5, **characterized in that** a plurality of such continuous belts of transparent filters is provided.

7. The arrangement according to any one of the claims 4 to 6, **characterized in that** at least a portion of the continuous belts of transparent filters are arranged arbitrarily distributed over the array, provided said belts are parallel to each other.

8. The arrangement according to any one of the claims 4 to 6 **characterized in that** at least a portion of the continuous belts of transparent filters is arranged on the array with a periodical distance to each other, as far as said belts are parallel to each other, wherein preferably each m-th cell (q) (m>1) of the corresponding array comprises such a continuous belt of transparent filters.

9. The arrangement according to any one of claims 4 to 8, **characterized in that** for a parallel projection of one-but not necessarily each one - of such continuous belts of transparent filters, when viewed along a viewing direction facing the grid of image elements ($\alpha_{ij}$), mostly such image elements ($\alpha_{ij}$), that mostly or exclusively display partial information of one single view ($A_k$), are at least partly covered by transparent filters.

10. The arrangement according to any one of claims 4 to 8, **characterized in that** for a parallel projection of one-but not necessarily each one-of such continuous belts of transparent filters, when viewed along a viewing direction facing the grid of image elements ($\alpha_{ij}$), a plurality of such image elements ($\alpha_{ij}$), that display partial information of at least two different views ($A_k$), are at least partly covered by transparent filters.

11. The arrangement according to any one of the above claims, **characterized in that** the mapping of partial information belonging to views ($A_k$) (k=1...n) to image elements ($\alpha_{ij}$) on the position (i,j) is done according to the following function

$$k = i - c_{ij} \cdot j - n \cdot IntegerPart\left[\frac{i - c_{ij} \cdot j - 1}{n}\right],$$

with

- (i) denoting the index of an image element ($\alpha_{ij}$) within a row of the grid,
- (j) denoting the index of an image element ($\alpha_{ij}$) within a column of the grid,
- (k) denoting the running number of the view ($A_k$) (k=1...n), out of which the partial information is selected that is to be displayed within an image element ($\alpha_{ij}$),
- (n) being the total number of views ($A_k$) (k=1...n) present,
- ($c_{ij}$) denoting a matrix of coefficients that can be chosen to combine respectively mix partial information belonging to different ones of the views ($A_k$) (k=1...n) of the grid and
- IntegerPart denotes a function to generate the largest integer number that does not exceed the argument within the brackets.

**12.** The arrangement according to any one of the above claims, **characterized in that**, for the provided filter arrays, the filter elements ($\beta_{pq}$) are combined to form a masking image depending on the filter element's wavelength of transparency / wave length range of transparency / the coefficient of transmission $\lambda_b$, according to the following formula:

$$b = p - d_{pq} \cdot q - n_m \cdot IntegerPart\left[\frac{p - d_{pq} \cdot q - 1}{n_m}\right],$$

with

- (p) denoting the index of a filter element ($\beta_{pq}$) within a row of the respective array,
- (q) denoting the index of a filter element ($\beta_{pq}$) within a column of the respective array,
- (b) denoting an integer that indicates one value representing wave length of transparency/ wavelength range of transparency / coefficient of transmission $\lambda_b$, for a grey level filter element ($\beta_{pq}$) at the position (p,q), wherein b is allowed to take values between 1 and ($b_{max}$) with $b_{max}$ being an integer with $b_{max} > 1$,
- ($n_m$) denoting an integer value greater than "Zero", which preferably corresponds to the total number (k) of views ($A_k$) displayed within the combined image,
- (dpq) denoting a matrix of coefficients that can be chosen to vary the creation of a masking image and
- IntegerPart denotes a function to produce the largest integer number that does not exceed the argument within the brackets.

**13.** The arrangement according to any one of the above claims, **characterized in that** exactly one array of filter elements ($\beta_{pq}$) is provided and the distance (z) of the said array and the grid of image elements ($\alpha_{ij}$), wherein the distance (z) is measured in perpendicular direction; is defined according to the following equation:

$$\frac{p_d}{s_p} = \frac{d_a \pm z}{z},$$

wherein

- (sp) denotes the mean horizontal distance between neighbouring image elements ($\alpha_{ij}$),
- ($p_d$) denotes the mean distance of pupils for a viewing person
- ($d_a$) a viewing distance that can be selected.

**14.** The arrangement according to any one of the above claims **characterized in that** all filter elements provided with the filter array(s) are identical in size.

**15.** The arrangement according to any one of the above claims **characterized in that** the filter elements provided with the at least one filter array are substantially arranged in a periodical arrangement.

**16.** The arrangement according to any one of the above claims **characterized in that** the directions of propagation of light are given for the partial information displayed within the respective image elements ($\alpha_{ij}$) according to their wave length /their range of wave length.

**17.** The arrangement according to any one of the above claims **characterized in that**, within at least one of the provided arrays of filter elements ($\beta_{pq}$) in at least one row (q) of the array, directly neighbouring filter elements are adjacent to a different number of directly neighbouringly positioned filter elements in row (q-1) than in row (q+1).

**18.** The arrangement according to any one of the above claims **characterized in that** each one of the provided filter arrays is implemented as a static, non-time varying filter array and is further arranged in an essentially fixed relative position with respect to the grid of image elements ($\alpha_{ij}$), hence the image generator.

**19.** The arrangement according to any one of the above claims **characterized in that** at least one image element ($\alpha_{ij}$) represents partial information of image information mixed from at least two different views ($A_k$).

**20.** The arrangement according to any one of the above claims, **characterized in that** the image generator is selected from the group consisting of a liquid crystal (LC) display, a plasma screen or a screen comprising OLEDs.

**21.** The arrangement according to any one of the above claims, wherein a translucent image display device, for example an LC-display as well as exactly one array of filter elements ($\beta_{pq}$) is provided, which is located, in viewing direction, between the image display device and a planar illumination device, and wherein further a switchable scattering disc is provided between the image display device and the filter array, such that in a first operation mode, for which the switchable scattering disc is set transparent, a three dimensional impression for the viewer is caused, whereas within a second operation mode, wherein the switchable scattering disc is set, at least partially, scattering, the effect of the array of filter elements ($\beta_{pq}$) is mostly lifted, such that the scattered light enables an essentially homogenous illumination of the image display device and two dimensional image information can perceptibly be displayed in full resolution.

**22.** The arrangement according to any one of claims 1 to 20, wherein at least one array of filter elements ($\beta_{pq}$) is provided, which comprises pixels acting at least partially as wave length filter respectively grey scale filter with an electrochromic or photochromic setup, wherein the array displays, in a first mode of operation for the 3D representation, in particular using the electrochromic or the photochromic pixel, a filter array structure suitable for the 3D representation, whereas in a second mode of operation the electrochromic or the photochromic pixels are set as transparent as possible, preferably essentially completely transparent over the whole visible spectrum.

**23.** The arrangement according to claim 22, **characterized in that** wave length respectively grey scale filters are provided that are electrochromic respectively photochromic as well as unchangeable in their transmission characteristics, wherein said filters having unchangeable transmission characteristics are preferably implemented as essentially completely transparent over the whole visible spectrum.

**Revendications**

**1.** Dispositif de représentation spatiale d'une scène ou d'un objet, comprenant

- un générateur d'image avec une pluralité d'éléments d'image respectifs ($\alpha_{ij}$) dans une matrice de lignes (j) et colonnes (i), les éléments d'image ($\alpha_{ij}$) représentant des informations partielles d'au moins trois vues (Ak) (k=1...n, n>=3) de la scène/de l'objet,
- un ou plusieurs ensembles d'une pluralité d'éléments filtrants ($\beta_{pq}$) respectifs, utilisés en tant que filtres de longueurs d'onde et/ou de niveau de gris, agencés en lignes (q) et colonnes (p), dont une partie est réalisée en tant que filtre transparent laissant passer la lumière de l'ensemble du spectre visible, et la partie restante est opaque, et les éléments filtrants se trouvant, dans la direction de vue, en amont et/ou en aval du dispositif de transmission d'image avec les éléments d'image ($\alpha$ij), de sorte que des directions de propagation soient fixées pour la lumière rayonnée des éléments d'image ($\alpha$ij), dans lequel respectivement un élément d'image ($\alpha$ij) correspond à plusieurs éléments filtrants ($\beta_{pq}$) attribués ou un élément filtrant ($\beta_{pq}$) correspond à plusieurs éléments d'image attribués de telle façon que respectivement la droite de liaison entre le milieu de surface d'une section visible de l'élément d'image ($\alpha_{ij}$) et le milieu de surface d'une section visible de l'élément filtrant ($\beta$pq) correspond à une direction de propagation, dans lequel les directions de propagation se croisent, à l'intérieur d'une zone d'observation dans laquelle le/les observateur/s se trouve/nt, en une pluralité de points d'intersection, qui correspondent respectivement à une position d'observation, un observateur discernant optiquement, à partir de chaque position d'observation, essentiellement avec un oeil des informations partielles d'une première sélection, et essentiellement avec l'autre oeil des informations partielles d'une deuxième sélection à partir des vues (Ak) (k=1...n),

**caractérisé en ce que**

sur au moins un des ensembles, le rapport entre les parties de surface des éléments filtrants ($\beta$pq) laissant passer la lumière pour l'ensemble du spectre visible et la surface totale de tous les éléments filtrants multiplié par le nombre moyen (n') des vues représentées différentes, par ligne (j) de la matrice des éléments d'images ($\alpha$ij), est supérieur à 1 et au maximum 2.

2. Dispositif selon la revendication 1, **caractérisé en ce que** le quotient de la somme des parties de surface des éléments filtrants ($\beta$pq), qui sont transparents de manière plus extensive pour la lumière de sensiblement l'ensemble du spectre visible, et de la somme des parties de surface de tous les éléments filtrants ($\beta$pq) de l'ensemble respectif prend une valeur comprise entre le quotient Q1=1,1/n' et le quotient Q2=1,8/n', de sorte que, en moyenne, on voit toujours environ 1,1 à 1,8 élément d'image par section de matrice par rapport aux surfaces d'éléments d'image parce que les éléments filtrants ($\beta$pq) sont transparents pour le spectre visible complet.

3. Dispositif selon la revendication 1, **caractérisé en ce que** pour une projection parallèle d'une section de filtre suffisamment importante d'au moins un ensemble prévu d'éléments filtrants ($\beta$pq) sur au moins une ligne (j) ou au moins une colonne (i) de la matrice, au moins la 1,1/n'-ième et au maximum cependant la 1,8/n'-ième surface de la ligne (j) correspondante respectivement la colonne (i) correspondante est recouverte par les éléments filtrants ($\beta$pq) sensiblement transparents pour le spectre visible complet, de sorte que, en moyenne, on voit toujours environ 1,1 à 1,8 éléments d'image ($\alpha$ij) par section de matrice visible par rapport aux surfaces d'éléments d'image parce que les éléments filtrants ($\beta$pq) sont essentiellement transparents pour le spectre visible complet.

4. Dispositif selon la revendication 1, **caractérisé en ce qu'**il est prévu au moins une première ceinture continue de filtres transparents, allant de manière ininterrompue d'un premier coté de l'ensemble jusqu'à un deuxième coté opposé, et au moins une deuxième ceinture continue de filtres transparents allant de manière ininterrompue d'un coté de l'ensemble jusqu'à un coté opposé, les directions principales d'extension de ces deux ceintures sur l'ensemble n'étant pas arrangées de manière parallèle.

5. Dispositif selon la revendication 4, **caractérisé en ce qu'**au moins une des ceintures continues prévues de filtres transparents s'étend de manière parallèle au coté supérieur, inférieur, gauche ou droit de l'ensemble respectif de filtres de longueur d'ondes ou de niveaux de gris et/ou parallèle au coté supérieur, inférieur, gauche ou droit de la matrice d'éléments d'images ($\alpha$ij).

6. Dispositif selon la revendication 4 ou 5, **caractérisé en ce que** une pluralité de telles ceintures continues de filtres transparents est prévue.

7. Dispositif selon une quelconque des revendications 4 à 6, **caractérisé en ce qu'**au moins une partie des ceintures continues de filtres transparents est agencée de manière aléatoire sur l'ensemble, dans la mesure où les dites ceintures sont parallèles entre elles.

8. Dispositif selon une quelconque des revendications 4 à 6, **caractérisé en ce qu'**au moins une partie des ceintures continues de filtres transparents est agencée sur l'ensemble avec un espacement périodique entre elles, dans la mesure où les dites ceintures sont parallèles entre elles, dans lequel, de manière avantageuse, chaque m[ième] ligne (q) (avec m>1) de l'ensemble correspondant construit une ceinture continue correspondante de filtres transparents.

9. Dispositif selon l'une quelconque des revendications 4 à 8, **caractérisé en ce que** pour une projection parallèle d'une telle ceinture continue de filtres transparents - mais pas nécessairement de chaque ceintures - dans la direction d'observation sur la matrice d'éléments d'image ($\alpha$ij), surtout les éléments d'image ($\alpha$ij) sont recouverts au moins en partie de filtres transparents, les éléments d'image rendant une information partielle d' une seule et même vue (Ak), soit d'une partie prédominante ou exclusivement.

**10.** Dispositif selon l'une quelconque des revendications 4 à 8, **caractérisé en ce que** pour une projection parallèle d'une telle ceinture continue de filtres transparents - mais pas nécessairement pour chaque ceinture - dans la direction d'observation, sur la matrice d'éléments d'image ($\alpha_{ij}$), plusieurs de tels éléments d'image ($\alpha_{ij}$) sont au moins en partie recouverts de filtres transparents, rendant informations partielles d'au moins deux vues différentes (Ak).

**11.** Dispositif selon l'une quelconque des revendications précédentes, **caractérisé en ce que** l'agencement des informations partielles à partir des vues (Ak) (k=1...n) pour les éléments d'image (aij) en position (i, j) est mis en oeuvre selon la fonction

$$k = i - c_{ij} \cdot j - n \cdot IntegerPart\left[\frac{i - c_{ij} \cdot j - 1}{n}\right]$$

avec

(i) l'index d'un élément d'image ($\alpha_{ij}$) dans une ligne de la matrice,
(j) l'index d'un élément d'image ($\alpha_{ij}$) dans une colonne de la matrice,
(k) le numéro en cours de la vue (Ak) (k=1...n), à partir de laquelle l'information partielle est sélectionnée, qui doit être affichée sur un élément d'image choisi (aij),
(n) le numéro total des vues utilisées respectives (Ak) (k=1...n),
($c_{ij}$) une matrice de coefficients qui peut être choisie pour une combinaison en particulier un mélange des différentes informations partielles sélectionnées à partir des vues (Ak) (k=1...n) sur la matrice et
IntegerPart, une fonction pour générer le plus grand nombre entier, qui ne dépasse pas l'argument à l'intérieur des crochets.

**12.** Dispositif selon l'une quelconque des revendications précédentes, **caractérisé en ce que** pour les ensembles de filtres prévus, les éléments filtrants ($\beta$pq) sont combinés dans une image de masque, selon leur longueur d'onde de transparence / leur domaine de longueurs d'onde de transparence / leur coefficient de transmission ($\lambda$b), selon la fonction suivante

$$b = p - d_{pq} \cdot q - n_m \cdot IntegerPart\left[\frac{p - d_{pq} \cdot q - 1}{n_m}\right]$$

avec

(p) l'indice d'un élément filtrant ($\beta$pq) dans une ligne de l'ensemble respectif,
(q) indice d'un élément filtrant ($\beta$pq) dans une colonne de l'ensemble respectif,
(b) un nombre entier, qui fixe pour un filtre de longueurs d'onde ou de niveaux de gris ($\beta$pq) à la position (p, q) un des longueurs d'onde de transparence / leurs domaines de longueurs d'onde de transparence respectivement leurs coefficients de transmission ($\lambda$b) prévus, et qui peut avoir une valeur comprise entre 1 et (bmax), avec un entier naturel bmax > 1,
(nm) une valeur entière supérieure à « zero », qui correspond de manière préférée au total (k) correspondant au nombre de vues (Ak) représentées dans l'image de combinaison,
(dpq) une matrice de coefficients de masques qui peut être choisie pour faire varier la création d'une image de masque et
IntegerPart une fonction pour générer le plus grand nombre entier, qui ne dépasse pas l'argument à l'intérieur des crochets.

**13.** Dispositif selon l'une des revendications précédentes, **caractérisé en ce qu'**exactement un ensemble d'éléments filtrants (βpq) est prévu, et la distance (z) entre le dit ensemble et la matrice d'éléments d'image (αij), mesurée dans la direction normale, est définie selon l'équation suivante :

$$\frac{p_d}{s_p} = \frac{d_a \pm z}{z}$$

dans laquelle,
($s_p$) signifie la distance horizontale moyenne entre deux éléments d'image ($\alpha_{ij}$) voisins,
($p_d$) signifie la distance moyenne des pupilles chez un observateur, et
$d_a$ signifie une distance de vue qui peut être choisie.

**14.** Dispositif selon l'une quelconque des revendications précédentes, **caractérisé en ce que** tous les éléments filtrants prévus sur le ou les ensembles de filtres ont la même taille.

**15.** Dispositif selon l'une quelconque des revendications précédentes, **caractérisé en ce que** les éléments filtrants prévus sur le ou les ensembles de filtres sont ordonnés de manière essentiellement périodique.

**16.** Dispositif selon l'une quelconque des revendications précédentes, **caractérisé en ce que** les directions de propagation de la lumière pour l'information partielle respective rendu sur les éléments d'image ($\alpha_{ij}$) sont fixées en fonction de leur de leur longueur d'onde / leur domaine de longueurs d'onde.

**17.** Dispositif selon l'une quelconque des revendications précédentes, **caractérisé en ce que** sur au moins un des ensembles prévus d'éléments filtrants (βpq) dans au moins une ligne (q) de l'ensemble, des filtres transparents immédiatement voisins sont voisins d'un autre nombre de filtres transparents positionnés immédiatement voisins sur la ligne (q-1) que sur la ligne (q+1).

**18.** Dispositif selon l'une quelconque des revendications précédentes, **caractérisé en ce que** chacun des ensembles de filtres prévus est agencé comme un ensemble de filtres statique, qui ne varie pas avec le temps, et est arrangé dans essentiellement une position relative fixe par rapport à la matrice d'éléments d'image ($\alpha_{ij}$), c'est-à-dire par rapport au générateur d'images.

**19.** Dispositif selon l'une quelconque des revendications précédentes, **caractérisé en ce qu'**au moins un élément d'image (aij) rend au moins une information d'image mélangée à partir d'informations partielles d'au moins deux vues différentes (Ak).

**20.** Dispositif selon l'une quelconque des revendications précédentes, **caractérisé en ce que** le générateur d'images est un écran à cristaux liquides (LC), un écran plasma, ou un écran comprenant des OLED.

**21.** Dispositif selon l'une quelconque des revendications précédentes, dans lequel une unité de rendu d'images translucide, par exemple un écran à cristaux liquides, et également exactement un ensemble d'éléments filtrants (βpq) est prévu, étant situé dans la direction d'observation entre l'unité de rendu d'images et une unité d'illumination plane, et dans lequel un disque de dispersion commutable est en outre prévu entre l'unité de rendu d'images et l'ensemble de filtres, de sorte que dans un premier mode de fonctionnement, dans lequel le disque de dispersion commutable est commuté pour être transparent, une impression d'espace en 3D est obtenu pour le/les observateur/s, alors que dans un deuxième mode de fonctionnement, dans lequel le disque de dispersion commutable est commuté au moins en partie dispersant, l'effet de l'ensemble d'éléments filtrants (βpq) est essentiellement annulé, de sorte que la lumière dispersée rend possible une élimination essentiellement homogène de l'unité de rendu d'images et des contenus d'image bidimensionnels peuvent être représentés sur l'unité de rendu d'images, de manière perceptible, en pleine résolution.

**22.** Dispositif selon l'une quelconque des revendications 1 à 20, dans lequel au moins un ensemble d'éléments filtrants (βpq) est prévu, l'ensemble comprenant au moins partiellement des pixels fonctionnant en tant que filtres de longueur d'ondes ou de niveaux de gris, avec un assemblage photochrome ou électrochrome, l'ensemble presentant, dans un premier mode de fonctionnement pour la représentation en trois dimensions en particulier également sous utilisation du pixel assemblé photochrome ou électrochrome, une structure d'ensemble de filtres apte pour une représentation dans l'espace, alors que, dans un deuxième mode de fonctionnement, les pixels assemblés photochrome ou électrochromes sont commutés de façon à être aussi transparents que possible, plus particulièrement essentiellement totalement transparents pour le spectre visible complet.

23. Dispositif selon la revendication 22, **caractérisé en ce qu'**à la fois des filtres étant implémentés électrochromes respectivement photochromes et également étant des filtres de niveaux de gris ou de longueurs d'ondes ayant des propriétés de transmission statiques sont prévus, les dits filtres ayant des propriétés de transmission statiques étant de préférence agencés pour être essentiellement complètement transparents pour le spectre visible complet.

Fig.1a

Fig.1b

EP 1 600 007 B1

3

2

1

Fig.1c

EP 1 600 007 B1

|   | R | G | B | R | G | B | R | G | B | R | G | B | R | G | B | R |
| --- | --- | --- | --- | --- | --- | --- | --- | --- | --- | --- | --- | --- | --- | --- | --- | --- |
| i → | 1 | 2 | 3 | 4 | 5 | 6 | 7 | 8 | 9 | 10 | 11 | 12 | 13 | 14 | 15 | 16 |
| 1 | 2 | 3 | 4 | 1 | 2 | 3 | 4 | 1 | 2 | 3 | 4 | 1 | 2 | 3 | 4 | 1 |
| 2 | 2 | 3 | 4 | 1 | 2 | 3 | 4 | 1 | 2 | 3 | 4 | 1 | 2 | 3 | 4 | 1 |
| 3 | 2 | 3 | 4 | 1 | 2 | 3 | 4 | 1 | 2 | 3 | 4 | 1 | 2 | 3 | 4 | 1 |
| 4 | 3 | 4 | 1 | 2 | 3 | 4 | 1 | 2 | 3 | 4 | 1 | 2 | 3 | 4 | 1 | 2 |
| 5 | 3 | 4 | 1 | 2 | 3 | 4 | 1 | 2 | 3 | 4 | 1 | 2 | 3 | 4 | 1 | 2 |
| 6 | 3 | 4 | 1 | 2 | 3 | 4 | 1 | 2 | 3 | 4 | 1 | 2 | 3 | 4 | 1 | 2 |
| 7 | 4 | 1 | 2 | 3 | 4 | 1 | 2 | 3 | 4 | 1 | 2 | 3 | 4 | 1 | 2 | 3 |
| 8 | 4 | 1 | 2 | 3 | 4 | 1 | 2 | 3 | 4 | 1 | 2 | 3 | 4 | 1 | 2 | 3 |
| 9 | 4 | 1 | 2 | 3 | 4 | 1 | 2 | 3 | 4 | 1 | 2 | 3 | 4 | 1 | 2 | 3 |
| 10 | 1 | 2 | 3 | 4 | 1 | 2 | 3 | 4 | 1 | 2 | 3 | 4 | 1 | 2 | 3 | 4 |
| 11 | 1 | 2 | 3 | 4 | 1 | 2 | 3 | 4 | 1 | 2 | 3 | 4 | 1 | 2 | 3 | 4 |
| 12 | 1 | 2 | 3 | 4 | 1 | 2 | 3 | 4 | 1 | 2 | 3 | 4 | 1 | 2 | 3 | 4 |

Fig.2

Fig.3

Fig.4

EP 1 600 007 B1

EP 1 600 007 B1

| i → | 1 | 2 | 3 | 4 | 5 | 6 | 7 | 8 | 9 | 10 | 11 | 12 | 13 | 14 | 15 | 16 | 17 | 18 | 19 | 20 | 21 |
|---|---|---|---|---|---|---|---|---|---|---|---|---|---|---|---|---|---|---|---|---|---|
| R j1 | 1 | 2 | 3 | 4 | 1 | 2 | 3 | 4 | 1 | 2 | 3 | 4 | 1 | 2 | 3 | 4 | 1 | 2 | 3 | 4 | 1 |
| G 2 | 2 | 3 | 4 | 1 | 2 | 3 | 4 | 1 | 2 | 3 | 4 | 1 | 2 | 3 | 4 | 1 | 2 | 3 | 4 | 1 | 2 |
| B 3 | 2 | 3 | 4 | 1 | 2 | 3 | 4 | 1 | 2 | 3 | 4 | 1 | 2 | 3 | 4 | 1 | 2 | 3 | 4 | 1 | 2 |
| R 4 | 3 | 4 | 1 | 2 | 3 | 4 | 1 | 2 | 3 | 4 | 1 | 2 | 3 | 4 | 1 | 2 | 3 | 4 | 1 | 2 | 3 |
| G 5 | 4 | 1 | 2 | 3 | 4 | 1 | 2 | 3 | 4 | 1 | 2 | 3 | 4 | 1 | 2 | 3 | 4 | 1 | 2 | 3 | 4 |
| B 6 | 4 | 1 | 2 | 3 | 4 | 1 | 2 | 3 | 4 | 1 | 2 | 3 | 4 | 1 | 2 | 3 | 4 | 1 | 2 | 3 | 4 |
| R 7 | 1 | 2 | 3 | 4 | 1 | 2 | 3 | 4 | 1 | 2 | 3 | 4 | 1 | 2 | 3 | 4 | 1 | 2 | 3 | 4 | 1 |
| G 8 | 2 | 3 | 4 | 1 | 2 | 3 | 4 | 1 | 2 | 3 | 4 | 1 | 2 | 3 | 4 | 1 | 2 | 3 | 4 | 1 | 2 |
| B 9 | 2 | 3 | 4 | 1 | 2 | 3 | 4 | 1 | 2 | 3 | 4 | 1 | 2 | 3 | 4 | 1 | 2 | 3 | 4 | 1 | 2 |
| R 10 | 3 | 4 | 1 | 2 | 3 | 4 | 1 | 2 | 3 | 4 | 1 | 2 | 3 | 4 | 1 | 2 | 3 | 4 | 1 | 2 | 3 |
| G 11 | 4 | 1 | 2 | 3 | 4 | 1 | 2 | 3 | 4 | 1 | 2 | 3 | 4 | 1 | 2 | 3 | 4 | 1 | 2 | 3 | 4 |
| B 12 | 4 | 1 | 2 | 3 | 4 | 1 | 2 | 3 | 4 | 1 | 2 | 3 | 4 | 1 | 2 | 3 | 4 | 1 | 2 | 3 | 4 |

Fig.5

Fig.6

Fig.7

Fig.8

| i \\ j | 1 R | 2 G | 3 B | 4 R | 5 G | 6 B | 7 R | 8 G | 9 B | 10 R | 11 G | 12 B | 13 R | 14 G | 15 B | 16 R | 17 G | 18 B | 19 R | 20 G | 21 B |
|---|---|---|---|---|---|---|---|---|---|---|---|---|---|---|---|---|---|---|---|---|---|
| 1 | 1 | 2 | 3 | 4 | 5 | 6 | 7 | 8 | 1 | 2 | 3 | 4 | 5 | 6 | 7 | 8 | 1 | 2 | 3 | 4 | 5 |
| 2 | 2 | 3 | 4 | 5 | 6 | 7 | 8 | 1 | 2 | 3 | 4 | 5 | 6 | 7 | 8 | 1 | 2 | 3 | 4 | 5 | 6 |
| 3 | 2 | 3 | 4 | 5 | 6 | 7 | 8 | 1 | 2 | 3 | 4 | 5 | 6 | 7 | 8 | 1 | 2 | 3 | 4 | 5 | 6 |
| 4 | 3 | 4 | 5 | 6 | 7 | 8 | 1 | 2 | 3 | 4 | 5 | 6 | 7 | 8 | 1 | 2 | 3 | 4 | 5 | 6 | 7 |
| 5 | 4 | 5 | 6 | 7 | 8 | 1 | 2 | 3 | 4 | 5 | 6 | 7 | 8 | 1 | 2 | 3 | 4 | 5 | 6 | 7 | 8 |
| 6 | 4 | 5 | 6 | 7 | 8 | 1 | 2 | 3 | 4 | 5 | 6 | 7 | 8 | 1 | 2 | 3 | 4 | 5 | 6 | 7 | 8 |
| 7 | 5 | 6 | 7 | 8 | 1 | 2 | 3 | 4 | 5 | 6 | 7 | 8 | 1 | 2 | 3 | 4 | 5 | 6 | 7 | 8 | 1 |
| 8 | 6 | 7 | 8 | 1 | 2 | 3 | 4 | 5 | 6 | 7 | 8 | 1 | 2 | 3 | 4 | 5 | 6 | 7 | 8 | 1 | 2 |
| 9 | 6 | 7 | 8 | 1 | 2 | 3 | 4 | 5 | 6 | 7 | 8 | 1 | 2 | 3 | 4 | 5 | 6 | 7 | 8 | 1 | 2 |
| 10 | 7 | 8 | 1 | 2 | 3 | 4 | 5 | 6 | 7 | 8 | 1 | 2 | 3 | 4 | 5 | 6 | 7 | 8 | 1 | 2 | 3 |
| 11 | 8 | 1 | 2 | 3 | 4 | 5 | 6 | 7 | 8 | 1 | 2 | 3 | 4 | 5 | 6 | 7 | 8 | 1 | 2 | 3 | 4 |
| 12 | 8 | 1 | 2 | 3 | 4 | 5 | 6 | 7 | 8 | 1 | 2 | 3 | 4 | 5 | 6 | 7 | 8 | 1 | 2 | 3 | 4 |

Fig.9

Fig.10

EP 1 600 007 B1

Fig.11

Fig.12

Fig.13a

Fig.13b

Fig.14

EP 1 600 007 B1

Fig.15

Fig.16

Fig.17

Fig.18

Fig.19

| i → | 1 | 2 | 3 | 4 | 5 | 6 | 7 | 8 | 9 | 10 | 11 | 12 | 13 | 14 | 15 | 16 | 17 | 18 | 19 | 20 | 21 |
|---|---|---|---|---|---|---|---|---|---|---|---|---|---|---|---|---|---|---|---|---|---|
| j ↓ | R | G | B | R | G | B | R | G | B | R | G | B | R | G | B | R | G | B | R | G | B |
| 1 | 2 | 3 | 4 | 5 | 6 | 7 | 8 | 1 | 2 | 3 | 4 | 5 | 6 | 7 | 8 | 1 | 2 | 3 | 4 | 5 | 6 |
| 2 | 3 | 4 | 5 | 6 | 7 | 8 | 1 | 2 | 3 | 4 | 5 | 6 | 7 | 8 | 1 | 2 | 3 | 4 | 5 | 6 | 7 |
| 3 | 4 | 5 | 6 | 7 | 8 | 1 | 2 | 3 | 4 | 5 | 6 | 7 | 8 | 1 | 2 | 3 | 4 | 5 | 6 | 7 | 8 |
| 4 | 4 | 5 | 6 | 7 | 8 | 1 | 2 | 3 | 4 | 5 | 6 | 7 | 8 | 1 | 2 | 3 | 4 | 5 | 6 | 7 | 8 |
| 5 | 5 | 6 | 7 | 8 | 1 | 2 | 3 | 4 | 5 | 6 | 7 | 8 | 1 | 2 | 3 | 4 | 5 | 6 | 7 | 8 | 1 |
| 6 | 6 | 7 | 8 | 1 | 2 | 3 | 4 | 5 | 6 | 7 | 8 | 1 | 2 | 3 | 4 | 5 | 6 | 7 | 8 | 1 | 2 |
| 7 | 7 | 8 | 1 | 2 | 3 | 4 | 5 | 6 | 7 | 8 | 1 | 2 | 3 | 4 | 5 | 6 | 7 | 8 | 1 | 2 | 3 |
| 8 | 7 | 8 | 1 | 2 | 3 | 4 | 5 | 6 | 7 | 8 | 1 | 2 | 3 | 4 | 5 | 6 | 7 | 8 | 1 | 2 | 3 |
| 9 | 8 | 1 | 2 | 3 | 4 | 5 | 6 | 7 | 8 | 1 | 2 | 3 | 4 | 5 | 6 | 7 | 8 | 1 | 2 | 3 | 4 |
| 10 | 1 | 2 | 3 | 4 | 5 | 6 | 7 | 8 | 1 | 2 | 3 | 4 | 5 | 6 | 7 | 8 | 1 | 2 | 3 | 4 | 5 |
| 11 | 2 | 3 | 4 | 5 | 6 | 7 | 8 | 1 | 2 | 3 | 4 | 5 | 6 | 7 | 8 | 1 | 2 | 3 | 4 | 5 | 6 |
| 12 | 2 | 3 | 4 | 5 | 6 | 7 | 8 | 1 | 2 | 3 | 4 | 5 | 6 | 7 | 8 | 1 | 2 | 3 | 4 | 5 | 6 |
| 13 | 3 | 4 | 5 | 6 | 7 | 8 | 1 | 2 | 3 | 4 | 5 | 6 | 7 | 8 | 1 | 2 | 3 | 4 | 5 | 6 | 7 |
| 14 | 4 | 5 | 6 | 7 | 8 | 1 | 2 | 3 | 4 | 5 | 6 | 7 | 8 | 1 | 2 | 3 | 4 | 5 | 6 | 7 | 8 |
| 15 | 5 | 6 | 7 | 8 | 1 | 2 | 3 | 4 | 5 | 6 | 7 | 8 | 1 | 2 | 3 | 4 | 5 | 6 | 7 | 8 | 1 |
| 16 | 5 | 6 | 7 | 8 | 1 | 2 | 3 | 4 | 5 | 6 | 7 | 8 | 1 | 2 | 3 | 4 | 5 | 6 | 7 | 8 | 1 |

Fig.20

Fig.21

Fig.22

EP 1 600 007 B1

| i→ | R 1 | G 2 | B 3 | R 4 | G 5 | B 6 | R 7 | G 8 | B 9 | R 10 | G 11 | B 12 | R 13 | G 14 | B 15 | R 16 | G 17 | B 18 | R 19 | G 20 | B 21 |
|---|---|---|---|---|---|---|---|---|---|---|---|---|---|---|---|---|---|---|---|---|---|
| j 1 | 2 | 3 | 4 | 5 | 6 | 7 | 8 | 1 | 2 | 3 | 4 | 5 | 6 | 7 | 8 | 1 | 2 | 3 | 4 | 5 | 6 |
| 2 | 3 | 4 | 5 | 6 | 7 | 8 | 1 | 2 | 3 | 4 | 5 | 6 | 7 | 8 | 1 | 2 | 3 | 4 | 5 | 6 | 7 |
| 3 | 4 | 5 | 6 | 7 | 8 | 1 | 2 | 3 | 4 | 5 | 6 | 7 | 8 | 1 | 2 | 3 | 4 | 5 | 6 | 7 | 8 |
| 4 | 4 | 5 | 6 | 7 | 8 | 1 | 2 | 3 | 4 | 5 | 6 | 7 | 8 | 1 | 2 | 3 | 4 | 5 | 6 | 7 | 8 |
| 5 | 5 | 6 | 7 | 8 | 1 | 2 | 3 | 4 | 5 | 6 | 7 | 8 | 1 | 2 | 3 | 4 | 5 | 6 | 7 | 8 | 1 |
| 6 | 6 | 7 | 8 | 1 | 2 | 3 | 4 | 5 | 6 | 7 | 8 | 1 | 2 | 3 | 4 | 5 | 6 | 7 | 8 | 1 | 2 |
| 7 | 7 | 8 | 1 | 2 | 3 | 4 | 5 | 6 | 7 | 8 | 1 | 2 | 3 | 4 | 5 | 6 | 7 | 8 | 1 | 2 | 3 |
| 8 | 7 | 8 | 1 | 2 | 3 | 4 | 5 | 6 | 7 | 8 | 1 | 2 | 3 | 4 | 5 | 6 | 7 | 8 | 1 | 2 | 3 |
| 9 | 8 | 1 | 2 | 3 | 4 | 5 | 6 | 7 | 8 | 1 | 2 | 3 | 4 | 5 | 6 | 7 | 8 | 1 | 2 | 3 | 4 |
| 10 | 1 | 2 | 3 | 4 | 5 | 6 | 7 | 8 | 1 | 2 | 3 | 4 | 5 | 6 | 7 | 8 | 1 | 2 | 3 | 4 | 5 |
| 11 | 2 | 3 | 4 | 5 | 6 | 7 | 8 | 1 | 2 | 3 | 4 | 5 | 6 | 7 | 8 | 1 | 2 | 3 | 4 | 5 | 6 |
| 12 | 2 | 3 | 4 | 5 | 6 | 7 | 8 | 1 | 2 | 3 | 4 | 5 | 6 | 7 | 8 | 1 | 2 | 3 | 4 | 5 | 6 |
| 13 | 3 | 4 | 5 | 6 | 7 | 8 | 1 | 2 | 3 | 4 | 5 | 6 | 7 | 8 | 1 | 2 | 3 | 4 | 5 | 6 | 7 |
| 14 | 4 | 5 | 6 | 7 | 8 | 1 | 2 | 3 | 4 | 5 | 6 | 7 | 8 | 1 | 2 | 3 | 4 | 5 | 6 | 7 | 8 |
| 15 | 5 | 6 | 7 | 8 | 1 | 2 | 3 | 4 | 5 | 6 | 7 | 8 | 1 | 2 | 3 | 4 | 5 | 6 | 7 | 8 | 1 |
| 16 | 5 | 6 | 7 | 8 | 1 | 2 | 3 | 4 | 5 | 6 | 7 | 8 | 1 | 2 | 3 | 4 | 5 | 6 | 7 | 8 | 1 |

Fig.23

Fig.24

Fig.25

Fig.26

| | R | G | B | R | G | B | R | G | B | R | G | B | R | G | B | R | G | B | R | G | B |
|---|---|---|---|---|---|---|---|---|---|---|---|---|---|---|---|---|---|---|---|---|---|
| i → | 1 | 2 | 3 | 4 | 5 | 6 | 7 | 8 | 9 | 10 | 11 | 12 | 13 | 14 | 15 | 16 | 17 | 18 | 19 | 20 | 21 |
| j 1 | 1 | 2 | 3 | 4 | 5 | 6 | 7 | 8 | 1 | 2 | 3 | 4 | 5 | 6 | 7 | 8 | 1 | 2 | 3 | 4 | 5 |
| 2 | 2 | 3 | 4 | 5 | 6 | 7 | 8 | 1 | 2 | 3 | 4 | 5 | 6 | 7 | 8 | 1 | 2 | 3 | 4 | 5 | 6 |
| 3 | 4 | 4 | 4 | 4 | 4 | 4 | 4 | 4 | 4 | 4 | 4 | 4 | 4 | 4 | 4 | 4 | 4 | 4 | 4 | 4 | 4 |
| 4 | 3 | 4 | 5 | 6 | 7 | 8 | 1 | 2 | 3 | 4 | 5 | 6 | 7 | 8 | 1 | 2 | 3 | 4 | 5 | 6 | 7 |
| 5 | 4 | 5 | 6 | 7 | 8 | 1 | 2 | 3 | 4 | 5 | 6 | 7 | 8 | 1 | 2 | 3 | 4 | 5 | 6 | 7 | 8 |
| 6 | 4 | 4 | 4 | 4 | 4 | 4 | 4 | 4 | 4 | 4 | 4 | 4 | 4 | 4 | 4 | 4 | 4 | 4 | 4 | 4 | 4 |
| 7 | 5 | 6 | 7 | 8 | 1 | 2 | 3 | 4 | 5 | 6 | 7 | 8 | 1 | 2 | 3 | 4 | 5 | 6 | 7 | 8 | 1 |
| 8 | 6 | 7 | 8 | 1 | 2 | 3 | 4 | 5 | 6 | 7 | 8 | 1 | 2 | 3 | 4 | 5 | 6 | 7 | 8 | 1 | 2 |
| 9 | 4 | 4 | 4 | 4 | 4 | 4 | 4 | 4 | 4 | 4 | 4 | 4 | 4 | 4 | 4 | 4 | 4 | 4 | 4 | 4 | 4 |
| 10 | 7 | 8 | 1 | 2 | 3 | 4 | 5 | 6 | 7 | 8 | 1 | 2 | 3 | 4 | 5 | 6 | 7 | 8 | 1 | 2 | 3 |
| 11 | 8 | 1 | 2 | 3 | 4 | 5 | 6 | 7 | 8 | 1 | 2 | 3 | 4 | 5 | 6 | 7 | 8 | 1 | 2 | 3 | 4 |
| 12 | 4 | 4 | 4 | 4 | 4 | 4 | 4 | 4 | 4 | 4 | 4 | 4 | 4 | 4 | 4 | 4 | 4 | 4 | 4 | 4 | 4 |

Fig.27

EP 1 600 007 B1

Fig.28

Fig.29

Fig.30

Fig.31

Fig.32

EP 1 600 007 B1

| R | G | B | R | G | B | R | G | B | R | G | B | R | G | B | R | G | B | R | G | B | R |
|---|---|---|---|---|---|---|---|---|---|---|---|---|---|---|---|---|---|---|---|---|---|

i ⟶ 1 2 3 4 5 6 7 8 9 10 11 12 13 14 15 16 17 18 19 20 21 22

| j | 1 | 2 | 3 | 4 | 5 | 6 | 7 | 8 | 9 | 10 | 11 | 12 | 13 | 14 | 15 | 16 | 17 | 18 | 19 | 20 | 21 | 22 |
|---|---|---|---|---|---|---|---|---|---|---|---|---|---|---|---|---|---|---|---|---|---|---|
| 1 | | 5 | | | | 5 | | | | 5 | | | | 5 | | | | 5 | | | | 5 |
| 2 | | 5 | | | 5 | 5 | | | | 5 | | | 5 | 5 | | | | 5 | | | 5 | 5 |
| 3 | | 5 | | 4 | 5 | 5 | | | | 5 | | 4 | 5 | 5 | | | | 5 | | 4 | 5 | 5 |
| 4 | | 5 | | 5 | | 5 | | | | 5 | | 5 | | 5 | | | | 5 | | 5 | | 5 |
| 5 | | 5 | 5 | 6 | | 5 | | | | 5 | 5 | 6 | | 5 | | | | 5 | 5 | 6 | | 5 |
| 6 | | 5 | 5 | | | 5 | | | | 5 | 5 | | | 5 | | | | 5 | 5 | | | 5 |
| 7 | | 5 | | | | 5 | | | | 5 | | | | 5 | | | | 5 | | | | 5 |
| 8 | | 5 | | | | 5 | | 5 | 5 | | | | | 5 | | | 5 | 5 | | | | 5 |
| 9 | | 5 | | | | 5 | | 4 | 5 | 5 | | | | 5 | | 4 | 5 | 5 | | | | 5 |
| 10 | | 5 | | | | 5 | | 5 | | 5 | | | | 5 | | 5 | | 5 | | | | 5 |
| 11 | | 5 | | | | 5 | 5 | 6 | | 5 | | | | 5 | 5 | 6 | | 5 | | | | 5 |
| | | 5 | | | | 5 | 5 | | | 5 | | | | 5 | 5 | | | 5 | | | | 5 |

Fig.33

EP 1 600 007 B1

| i → | 1 R | 2 G | 3 B | 4 R | 5 G | 6 B | 7 R | 8 G | 9 B | 10 R | 11 G | 12 B | 13 R | 14 G | 15 B | 16 R | 17 G | 18 B | 19 R | 20 G |
|---|---|---|---|---|---|---|---|---|---|---|---|---|---|---|---|---|---|---|---|---|
| j 1 | 2 | | | | 6 | | | | 2 | | | | 6 | | | | 2 | | | |
| 2 | 3 | | | 5 | 7 | | | | 3 | | | 5 | 7 | | | | 3 | | | 5 |
| 3 | 3 | | 5 | 5 | 7 | | | | 3 | | 5 | 5 | 7 | | | | 3 | | 5 | 5 |
| 4 | 4 | | 6 | | 8 | | | | 4 | | 6 | | 8 | | | | 4 | | 6 | |
| 5 | 5 | 6 | | | 1 | | | | 5 | 6 | | | 1 | | | | 5 | 6 | | |
| 6 | 5 | 6 | | | 1 | | | | 5 | 6 | | | 1 | | | | 5 | 6 | | |
| 7 | 6 | | | | 2 | | | | 6 | | | | 2 | | | | 6 | | | |
| 8 | 7 | | | | 3 | | | 5 | 7 | | | | 3 | | | 5 | 7 | | | |
| 9 | 7 | | | | 3 | | 5 | 5 | 7 | | | | 3 | | 5 | 5 | 7 | | | |
| 10 | 8 | | | | 4 | | 6 | | 8 | | | | 4 | | 6 | | 8 | | | |
| 11 | 1 | | | | 5 | 6 | | | 1 | | | | 5 | 6 | | | 1 | | | |
| 12 | 1 | | | | 5 | 6 | | | 1 | | | | 5 | 6 | | | 1 | | | |

Fig.34

Fig.35

Fig.36

Fig.37

Fig.38

Fig.39

Fig.40

EP 1 600 007 B1

Fig.41

| | R | G | B | R | G | B | R | G | B | R | G | B | R | G | B | R | G | B | R | G | B |
|---|---|---|---|---|---|---|---|---|---|---|---|---|---|---|---|---|---|---|---|---|---|
| i → | 1 | 2 | 3 | 4 | 5 | 6 | 7 | 8 | 9 | 10 | 11 | 12 | 13 | 14 | 15 | 16 | 17 | 18 | 19 | 20 | 21 |
| j 1 | 1 | 1 | 2 | 3 | 4 | 4 | 5 | 6 | 1 | 1 | 2 | 3 | 4 | 4 | 5 | 6 | 1 | 1 | 2 | 3 | 4 |
| 2 | 2 | 2 | 3 | 4 | 5 | 5 | 6 | 1 | 2 | 2 | 3 | 4 | 5 | 5 | 6 | 1 | 2 | 2 | 3 | 4 | 5 |
| 3 | 3 | 3 | 4 | 5 | 6 | 6 | 1 | 2 | 3 | 3 | 4 | 5 | 6 | 6 | 1 | 2 | 3 | 3 | 4 | 5 | 6 |
| 4 | 4 | 4 | 5 | 6 | 1 | 1 | 2 | 3 | 4 | 4 | 5 | 6 | 1 | 1 | 2 | 3 | 4 | 4 | 5 | 6 | 1 |
| 5 | 5 | 5 | 6 | 1 | 2 | 2 | 3 | 4 | 5 | 5 | 6 | 1 | 2 | 2 | 3 | 4 | 5 | 5 | 6 | 1 | 2 |
| 6 | 6 | 6 | 1 | 2 | 3 | 3 | 4 | 5 | 6 | 6 | 1 | 2 | 3 | 3 | 4 | 5 | 6 | 6 | 1 | 2 | 3 |
| 7 | 1 | 1 | 2 | 3 | 4 | 4 | 5 | 6 | 1 | 1 | 2 | 3 | 4 | 4 | 5 | 6 | 1 | 1 | 2 | 3 | 4 |
| 8 | 2 | 2 | 3 | 4 | 5 | 5 | 6 | 1 | 2 | 2 | 3 | 4 | 5 | 5 | 6 | 1 | 2 | 2 | 3 | 4 | 5 |
| 9 | 3 | 3 | 4 | 5 | 6 | 6 | 1 | 2 | 3 | 3 | 4 | 5 | 6 | 6 | 1 | 2 | 3 | 3 | 4 | 5 | 6 |
| 10 | 4 | 4 | 5 | 6 | 1 | 1 | 2 | 3 | 4 | 4 | 5 | 6 | 1 | 1 | 2 | 3 | 4 | 4 | 5 | 6 | 1 |
| 11 | 5 | 5 | 6 | 1 | 2 | 2 | 3 | 4 | 5 | 5 | 6 | 1 | 2 | 2 | 3 | 4 | 5 | 5 | 6 | 1 | 2 |
| 12 | 6 | 6 | 1 | 2 | 3 | 3 | 4 | 5 | 6 | 6 | 1 | 2 | 3 | 3 | 4 | 5 | 6 | 6 | 1 | 2 | 3 |

EP 1 600 007 B1

Fig.42

Fig.43

Fig.44

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5936774 A
- EP 0791847 A
- EP 0783825 A
- JP 8194190 A
- DE 10003326 C2
- DE 20121318 U1
- WO 03024112 A